(19) Europäisches Patentamt / European Patent Office / Office européen des brevets

(11) **EP 4 192 095 B1**

(12) **EUROPEAN PATENT SPECIFICATION**

(45) Date of publication and mention
of the grant of the patent:
**04.09.2024  Bulletin 2024/36**

(21) Application number: **20952734.0**

(22) Date of filing: **09.09.2020**

(51) International Patent Classification (IPC):
*H04W 72/02* $^{(2009.01)}$          *H04W 72/20* $^{(2023.01)}$
*H04W 4/46* $^{(2018.01)}$          *H04W 72/40* $^{(2023.01)}$

(52) Cooperative Patent Classification (CPC):
**H04W 72/02; H04W 4/46; H04W 72/20;**
**H04W 72/40;** H04W 72/25

(86) International application number:
**PCT/CN2020/114268**

(87) International publication number:
**WO 2022/051946 (17.03.2022 Gazette 2022/11)**

(54) **RESOURCE RESELECTION METHOD AND APPARATUS**

VERFAHREN UND VORRICHTUNG ZUR RESSOURCENNEUAUSWAHL

PROCÉDÉ ET APPAREIL DE RESÉLECTION DE RESSOURCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.06.2023  Bulletin 2023/23**

(73) Proprietor: **GUANGDONG OPPO MOBILE
TELECOMMUNICATIONS
CORP., LTD.
Dongguan, Guangdong 523860 (CN)**

(72) Inventor: **DING, Yi
Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(56) References cited:
EP-A1- 4 169 318          WO-A1-2017/173665
CN-A- 106 792 885          CN-A- 107 241 804
CN-A- 110 167 072          CN-A- 111 034 293
US-A1- 2019 387 377          US-A1- 2020 029 245

• HUAWEI ET AL: "Inter-UE coordination in sidelink
resource allocation", vol. RAN WG1, no.
E-meeting; 20200817 - 20200828, 8 August 2020
(2020-08-08), XP052346632, Retrieved from the
Internet
<URL:https://ftp.3gpp.org/tsg_ran/WG1_RL1/TS
GR1_102-e/Docs/R1-2005255.zip
R1-2005255.docx> [retrieved on 20200808]
• MODERATOR (LG ELECTRONICS): "Summary
for AI 8.11.2.2 Feasibility and benefits for mode 2
enhancements", vol. RAN WG1, no. e-Meeting;
20200817 - 20200828, 4 September 2020
(2020-09-04), XP051929919, Retrieved from the
Internet
<URL:https://ftp.3gpp.org/tsg_ran/WG1_RL1/TS
GR1_102-e/Docs/R1-2007412.zip> [retrieved on
20200904]

**Description**

**TECHNICAL FIELD**

Embodiments of the present disclosure generally relate to the mobile communication technical field, and more particularly, to a resource reselection method and device, a terminal and a storage medium.

**BACKGROUND**

In order to realize direct communication between terminals in the Vehicle to everything (V2X) system, SideLink (SL) transmission modes are introduced.

In one mode of SL transmission, a terminal needs to perform resource selection in a resource pool. For a selected resource, the terminal may transmit SideLink Control Information (SCI) to other terminals to reserve the selected resource. The reserved selected resource may also be pre-empted by other terminals when data of higher priority needs to be transmitted.

When the terminal re-evaluates the selected resource or determines whether the selected resource is pre-empted by other terminals, the re-evaluation or determination may be affected by a hidden station problem. EP4169318 discloses a method of operating a user equipment (UE) is provided. The method includes receiving a configuration message to enable inter-UE co-ordination for a sidelink (SL) resource pool, determining a target UE for a SL transmission, and transmitting, to the target UE, a signal to activate or trigger transmission of inter-UE co-ordination information. The method further includes receiving the inter-UE co-ordination information, determining a set of candidate SL resources based on the inter-UE co-ordination information, selecting a SL resource within the determined set, and transmitting a SL channel on the SL resource. R1-2007412 "Summary for AI 8.11.2.2 Feasibility and benefits for mode 2 enhancements",3GPP DRAFT, discloses a feasibility and benefits for mode 2 enhancements, regarding inter-terminal resource selection coordination for sidelink communications addressing how to define the set of resources to be sent to the coordinated terminal, when should the coordinating terminal transmits a set of resources to the coordinated terminal, how the coordinated terminal should use the set of resources, among other related aspects regarding hidden node and half-duplex problems in sidelink communications in Mode 2.

**SUMMARY**

The invention is defined by the independent claims. Aspects or embodiments of the disclosure which do not fall under the scope of the claims are not included in the scope of the invention. Embodiments of the present disclosure provide a resource reselection method and device, a terminal and a storage medium, which can solve the impact of the hidden station problem on the re-evaluation stage of a selected resource as much as possible and the impact of the hidden station problem on determination of whether a selected resource is pre-empted by other terminals as much as possible. The technical solutions are as follows.

According to an aspect of the present invention, there is provided a resource reselection method, applied in a first terminal, the method including:

transmitting to a second terminal a priority of to-be-transmitted data;
receiving a resource set transmitted by the second terminal, wherein the resource set is used to indicate a resource exclusion result obtained by a resource exclusion procedure determined by the second terminal according to the priority of the to-be-transmitted data; and
when performing re-evaluation on a first selected resource, determining whether to perform reselection for the first selected resource according to the resource set;
wherein the first selected resource is a resource that has been selected by the first terminal and is not indicated to another terminal via first sidelink control information, wherein the method further comprises: indicating to the second terminal a parameter required in the resource exclusion procedure, wherein the parameter comprises: a second parameter related to a resource selection window; or wherein the parameter required in the resource exclusion procedure is determined by the second terminal itself, and the parameter comprises a first parameter related to a resource selection window,

According to an aspect of the present disclosure, there is provided a resource reselection method, applied in a second terminal, the method including:

receiving a priority of to-be-transmitted data from a first terminal;
performing a resource exclusion procedure according to the priority of the to-be-transmitted data to obtain a resource exclusion result; and

transmitting a resource set to the first terminal according to the resource exclusion result, wherein the resource set is used to indicate the resource exclusion result; wherein the method further comprises: receiving a parameter required in the resource exclusion procedure which is indicated by the first terminal, wherein the parameter comprises: a second parameter related to a resource selection window; or wherein the parameter required in the resource exclusion procedure is determined by the second terminal itself, and the parameter comprises a first parameter related to a resource selection window,

According to an aspect of the present disclosure, there is provided a resource reselection method, applied in a first terminal, the method including:

transmitting to a second terminal a priority of to-be-transmitted data;
receiving a resource set transmitted by the second terminal, wherein the resource set is used to indicate a resource pre-emption situation obtained in a resource exclusion procedure determined by the second terminal according to the priority of the to-be-transmitted data; and
during determination of whether a second selected resource is pre-empted by another terminal, determining whether to perform reselection for the second selected resource according to the resource set.

According to an aspect of the present disclosure, there is provided a resource reselection method, applied in a second terminal, the method including:

receiving a priority of to-be-transmitted data from a first terminal;
performing a resource exclusion procedure according to the priority of the to-be-transmitted data to obtain a resource pre-emption situation; and
transmitting a resource set to the first terminal according to the resource pre-emption situation, wherein the resource set is used to indicate the resource pre-emption situation.

According to an aspect of the present disclosure, there is provided a resource reselection device, including:

a transmitting module configured to transmit to a second terminal a priority of to-be-transmitted data;
a receiving module configured to receive a resource set transmitted by the second terminal, wherein the resource set is used to indicate a resource exclusion result obtained by a resource exclusion procedure determined by the second terminal according to the priority of the to-be-transmitted data; and
a reselection module configured to, when performing re-evaluation on a first selected resource, determine whether to perform reselection for the first selected resource according to the resource set;
wherein the first selected resource is a resource that has been selected by the first terminal and is not indicated via first sidelink control information; wherein the transmitting module is configured to: indicate to the second terminal a parameter required in the resource exclusion procedure, wherein the parameter comprises: a second parameter related to a resource selection window; or wherein the parameter required in the resource exclusion procedure is determined by the second terminal itself, and the parameter comprises a first parameter related to a resource selection window,

According to an aspect of the present invention, there is provided a resource reselection device, including:

a receiving module configured to receive a priority of to-be-transmitted data from a first terminal;
a resource exclusion module configured to perform a resource exclusion procedure according to the priority of the to-be-transmitted data to obtain a resource exclusion result; and
a transmitting module configured to transmit a resource set to the first terminal according to the resource exclusion result, wherein the resource set is used to indicate the resource exclusion result; wherein the receiving module is configured to: receive a parameter required in the resource exclusion procedure which is indicated by the first terminal, wherein the parameter comprises: a second parameter related to a resource selection window; or wherein the parameter required in the resource exclusion procedure is determined by the second terminal itself, and the parameter comprises a first parameter related to a resource selection window.

According to a non-claimed aspect of the present disclosure, there is provided a resource reselection device, applied in a first terminal, the device including:

a transmitting module configured to transmit to a second terminal a priority of to-be-transmitted data;

a receiving module configured to receive a resource set transmitted by the second terminal, wherein the resource set is used to indicate a resource pre-emption situation obtained in a resource exclusion procedure determined by the second terminal according to the priority of the to-be-transmitted data; and

a reselection module configured to, during determination of whether a second selected resource is pre-empted by another terminal, determine whether to perform reselection for the second selected resource according to the resource set.

According to a non-claimed aspect of the present disclosure, there is provided a resource reselection device, applied in a second terminal, the device including:

a receiving module configured to receive a priority of to-be-transmitted data from a first terminal;

a resource exclusion module configured to perform a resource exclusion procedure according to the priority of the to-be-transmitted data to obtain a resource pre-emption situation; and

a transmitting module configured to transmit a resource set to the first terminal according to the resource pre-emption situation, wherein the resource set is used to indicate the resource pre-emption situation.

According to a non-claimed aspect of the present disclosure, there is provided a terminal, including:

a processor;

a transceiver connected to the processor; and

a memory storing instructions executable by the processor;

wherein the processor is configured to load and execute the executable instructions to perform the resource reselection methods in the above aspects.

According to a non-claimed aspect of the present disclosure, there is provided a computer-readable storage medium having executable instructions stored thereon, wherein when executable instructions are loaded and executed by a processor, the processor is caused to perform the resource reselection methods in the above aspects.

According to a non-claimed aspect of the present disclosure, there is provided a computer program product or a computer program. The computer program product or the computer program includes computer instructions. The computer instructions are stored in a computer-readable storage medium, a processor of a computer device reads the computer instructions from the computer-readable storage medium, and the processor executes the computer instructions, so as to cause the computer device to perform the resource reselection methods in the above aspects.

According to a non-claimed aspect of the present disclosure, there is provided a chip including a programmable logic circuit or a program. The chip is configured to perform the resource reselection methods in the above aspects.

The technical solutions provided by the embodiments of the present disclosure have at least the following beneficial effects:

Through the collaboration between the first terminal and the second terminal, the second terminal helps the first terminal with the resource exclusion procedure to obtain the resource set. The first terminal uses the resource set transmitted by the second terminal as assistance information to provide assistance in the reselection procedure in the re-evaluation stage or the determination stage about whether the selected resource is pre-empted, thereby effectively eliminating the impact of the hidden station problem on the re-evaluation stage of the first terminal or the determination stage of the first terminal about whether the selected resource is pre-empted.

**BRIEF DESCRIPTION OF THE DRAWINGS**

In order to more clearly illustrate the technical solutions in the embodiments of the present disclosure, the following is a brief description of the accompanying drawings to be used in the description of the embodiments. It is obvious that the accompanying drawings in the following description are only some of the embodiments of the present disclosure, and other accompanying drawings can be obtained according to these drawings without any creative work for a person of ordinary skill in the art.

FIG. 1 is a schematic diagram showing sidelink transmission modes in related art involved in the present disclosure.
FIG. 2 is a block diagram of a physical layer structure of NR-V2X in related art involved in the present disclosure.
FIG. 3 is a block diagram of resource reservation within a TB or between TBs in related art involved in the present disclosure.
FIG. 4 is a schematic diagram of a resource selection method according to an example embodiment of the present disclosure.
FIG. 5 is a schematic diagram of a resource selection method according to an example embodiment of the present disclosure.

FIG. 6 is a schematic diagram of a resource re-evaluation procedure according to an example embodiment of the present disclosure.

FIG. 7 is a schematic diagram of a resource pre-emption determination procedure according to an example embodiment of the present disclosure.

FIG. 8 is a schematic diagram of a hidden station problem in related art involved in the present disclosure.

FIG. 9 is a block diagram of a communication system supporting sidelink transmission according to an example embodiment of the present disclosure.

FIG. 10 is a flowchart of a resource reselection method according to an example embodiment of the present disclosure.

FIG. 11 is a diagram showing time and frequency resources when a resource processing method provided by an example embodiment of the present disclosure is in an exemplary implementation.

FIG. 12 is a flowchart of a resource reselection method according to an example embodiment of the present disclosure.

FIG. 13 is a diagram showing time and frequency resources when a resource processing method provided by an example embodiment of the present disclosure is in an exemplary implementation.

FIG. 14 is a flowchart of a resource reselection method according to an example embodiment of the present disclosure.

FIG. 15 is a diagram showing time and frequency resources when a resource processing method provided by an example embodiment of the present disclosure is in an exemplary implementation,

FIG. 16 is a flowchart of a resource reselection method according to an example embodiment of the present disclosure.

FIG. 17 is a diagram showing time and frequency resources when a resource processing method provided by an example embodiment of the present disclosure is in an exemplary implementation.

FIG. 18 is a block diagram of a structure of a resource reselection device according to an example embodiment of the present disclosure.

FIG. 19 is a block diagram of a structure of a resource reselection device according to an example embodiment of the present disclosure.

FIG. 20 is a block diagram of a structure of a resource reselection device according to an example embodiment of the present disclosure.

FIG. 21 is a block diagram of a structure of a resource reselection device according to an example embodiment of the present disclosure.

FIG. 22 is a schematic diagram of a structure of a communication device according to an example embodiment of the present disclosure.

## DETAILED DESCRIPTION

In order to make the purposes, technical solutions and advantages of the present disclosure clearer, embodiments of the present disclosure will be described below in further detail in conjunction with the accompanying drawings.

First, terms involved in embodiments of the present disclosure are briefly introduced.

Vehicle to everything (V2X): this is a key technology for future intelligent transportation system, and mainly studies the vehicle data transmission schemes based on 3GPP communication protocols. V2x communication includes Vehicle to Vehicle (V2V) communication, Vehicle to Infrastructure (V2I) communication, and Vehicle to People (V2P) communication. The V2X applications will improve driving safety, reduce congestion and vehicle energy consumption, and improve traffic efficiency.

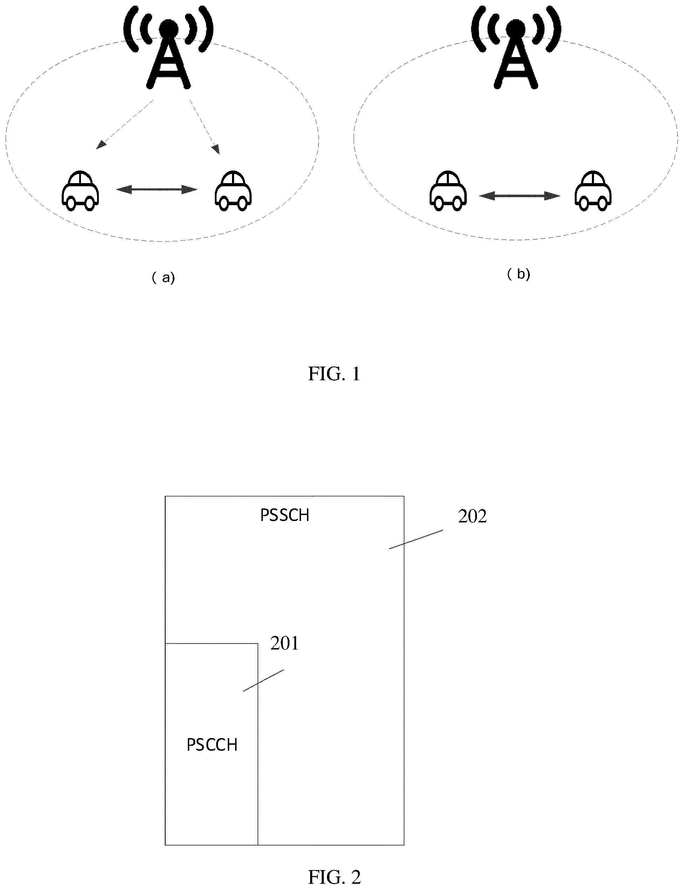

Side Link (SL) transmission: this is a device-to-device communication method with high spectral efficiency and low transmission latency. Two sidelink transmission modes are defined in 3GPP: mode A and mode B. As shown in (a) of FIG. 1, in mode A, resources used by a terminal for transmission are allocated by a base station through the downlink, and the terminal transmits data on the sidelink according to the resources allocated by the base station. The base station may allocate to the terminal resources for a single transmission or resources for semi-static transmission. As shown in (b) of FIG. 1, in mode B, a terminal autonomously selects one or more resources in a resource pool for data transmission. Specifically, the terminal may select a transmission resource in the resource pool by sensing, or the terminal may select a transmission resource in the resource pool by random selection. V2V uses the sidelink for communications.

In New Radio (NR)-V2X, it is needed to support autonomous driving, and therefore higher requirements are imposed on data interactions between vehicles, such as higher throughput, lower latency, higher reliability, greater coverage, and more flexible resource allocation.

The physical layer structure of NR-V2X is shown in FIG. 2. The Physical Side-link Control Channel (PSCCH) 201 for transmitting control information is contained in the Physical Side-link Shared Channel (PSSCH) 202 for transmitting data, which means that PSCCH 201 and PSSCH 202 must be sent at the same time. In mode B in NR-V2X, a terminal autonomously selects resources in a resource pool to transmit data. Resource reservation is a prerequisite for resource selection. Resource reservation means that a terminal transmits first sidelink control information in the PSCCH to reserve the resource(s) to be used next. In NR-V2X, resource reservation within a single Transport Block (TB) is supported, and resource reservation between two TBs is also supported.

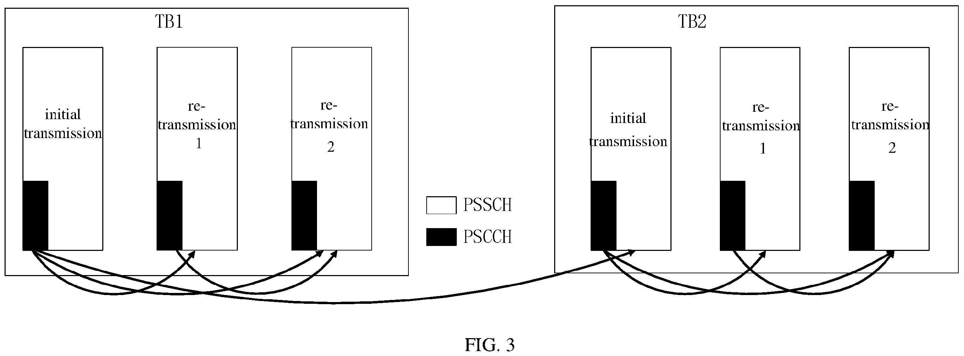

The terminal transmits the first sidelink control information and uses the "Time resource assignment" and "Frequency resource assignment" fields in the first sidelink control information to indicate N time and frequency resources of the current TB (including the resources used for current transmission), $N \leq N_{max}$, and $N_{max}$ is equal to 2 or 3 in NR V2X. Also, the above N indicated time and frequency resources should be distributed in W slots. In NR V2X, W is equal to 32. For example, in TB 1 of FIG. 3, a terminal transmits the first sidelink control information in PSCCH while sending the initial transmission data in PSSCH, and uses the above two fields to indicate the positions of time and frequency resources for the initial transmission, retransmission 1 and retransmission 2 (i.e., N=3 at this time), that is, the time and frequency resources for retransmission 1 and retransmission 2 are reserved. And, the initial transmission, retransmission 1 and retransmission 2 are distributed in 32 slots in the time domain.

Meanwhile, the terminal uses the "Resource reservation period" field to perform resource reservation between TBs when transmitting the first sidelink control information. For example, in FIG. 3, when transmitting the first sidelink control information for the initial transmission of TB1, the terminal uses the "Time resource assignment" and "Frequency resource assignment" fields to indicate the positions of time and frequency resources for the initial transmission, retransmission 1 and retransmission 2 of TB 1, which are noted as {(t1,f1),(t2,f2),(t3,f3)}, where t1, t2, and t3 represent the time domain positions of the resources for TB 1 initial transmission, retransmission 1 and retransmission 2, and f1, f2, and f3 represent the corresponding frequency domain positions. If the value of the "Resource reservation period" field in this SCI is 100 milliseconds, then this SCI indicates the time and frequency resources {(t1+100,f1), (t2+100,f2), (t3+100,f3)} at the same time, and the three resources are used for transmission of TB 2 initial transmission, retransmission 1 and retransmission 2. In NR V2X, the possible values of the "Resource reservation period" field are 0, 1-99, 100, 200, 300, 400, 500, 600, 700, 800, 900, 1000 millisecond, which is more flexible compared with LTE V2X. However, in each resource pool, only e values among these values are configured, and the terminal determines the possible values to be used according to the resource pool used. The e values in the resource pool configuration is the resource reservation period set M. Exemplarily, e is less than or equal to 16,

In addition, through network configuration or pre-configuration, the aforementioned reservation between TBs may be activated or deactivated on a resource pool basis. When the reservation between TBs is deactivated, the "Resource reservation period" field is not included in the first sidelink control information.

When the terminal operates in the above-mentioned mode B, the terminal may obtain the first sidelink control information transmitted by other terminals by sensing the PSCCHs transmitted by other terminals, so as to know the resources reserved by other terminals. When the terminal performs resource selection, the terminal excludes resources reserved by other terminals to avoid resource collision.

Resource selection method in NR-V2X

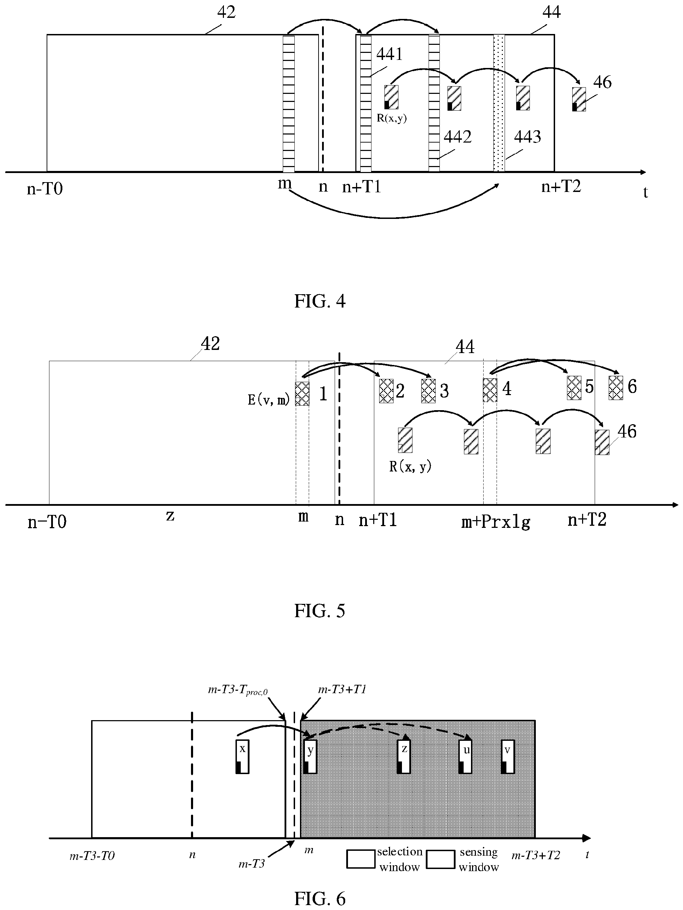

As shown in FIG. 4 and FIG. 5, a resource selection window (referred to as the selection window) starts at the time moment n+T1 and ends at the time moment n+T2.

In the figures, $0 <= T1 <= T_{proc, 1}$, $T_{proc, 1}$ is the time for terminal 1 to perform resource selection and prepare data. When the subcarrier spacing is 15, 30, 60, 120 kHz, $T_{proc,1}$ corresponds to 3, 5, 9, 17 slots; $T2_{min} <= T2 <=$ remaining delay budget of the service. The set of values of $T2_{min}$ is 11, 5, 10, 20}*$2^\mu$ slots, p = 0, 1, 2, 3 corresponds to the subcarrier spacing of 15kHz, 30kHz, 60kHz, 120kHz, respectively. The terminal 1 determine $T2_{min}$ from the set of values according to priority of to-be-transmitted data. When $T2_{min}$ is greater than the remaining delay budget of the service, T2 = remaining delay budget of the service.

The remaining delay budget is the difference between the latency requirement of data and the current time moment. For example, for a data packet arriving in slot n, the latency requirement is 50 milliseconds, assuming a slot of 1 millisecond, if the current time moment is slot n, the remaining delay budget is 50 milliseconds; if the current time moment is slot n+20, the remaining delay budget is 30 milliseconds.

Terminal 1 senses resources at time moments n-T0 to $n-T_{proc, 0}$. The value of T0 is 100 or 1100 milliseconds, and $T_{proc, 0}$ is the time for the terminal to decode control information. When the subcarrier spacing is 15, 30, 60, or 120 kHz, $T_{proc,0}$ is 1, 1, 2, or 4 slots, respectively.

**Step 1: resource exclusion procedure;**

It is assumed that there are data packets of a service arriving at moment n for terminal 1, and it is needed to perform resource selection. Terminal 1 takes all available resources within the resource selection window 44 that belong to the resource pool used by terminal 1 as a resource set A. Any one resource in the resource set A is noted as R(x, y), and x and y indicate the frequency domain position and time domain position of the resource, respectively. The initial number of all available resources belonging to the resource pool used by terminal 1 within the resource selection window 44 is noted as $M_{total}$.

**Step 1-1:** if terminal 1 transmits data in slot m within the resource sensing window 42 without sensing, terminal 1 determines whether slot m+q*Prxlg overlaps (fully and partially) with a resource R(x,y+j*Ptxlg); if there is overlap, the resource R(x,y) is excluded from the resource set A, where j=0,1,2,3...C-1, and C is determined by a random counter value generated by terminal 1. When terminal 1 performs resource selection, terminal 1 randomly generates a counter value (a positive integer), so as to determine the number of periods to be reserved for the resource to be selected. Ptxlg is a number after Ptx is converted to a logical slot, Ptx is the resource reservation period determined by terminal 1, and is one of the values taken from the resource reservation period set M in the resource pool configuration used by terminal 1, and is the value that will be indicated in the "Resource reservation period" field of the first sidelink control information of terminal 1 when terminal 1 transmits data after completing the resource selection. Thus, the resource R(x,y+j*Ptxlg) is a series of resources 46 marked by the slash shadow in FIG. 4. For the slot m+q*Prxlg, where q=1,2,3..,Q, Prxlg is the number after Prx is converted into a logical slot, and Prx is the resource reservation period indicated by "Resource reservation period" in the first sidelink control information transmitted in the PSCCH sensed by terminal 1. Since terminal 1 does not perform sensing in slot m, Prx here is all possible values of the resource reservation period set M in the resource pool configuration used by terminal 1, i.e., terminal 1 determines whether the slot m+q*Prxlg calculated for

$$Q= \lceil Tscal/Prx \rceil$$

each value in M overlaps with the resource R(x,y+j*Ptxlg). For Q, if Prx< Tscal and n-m <= Prxlg, (rounding up); otherwise, Q=1. Tscal is equal to T2. For example, terminal 1 does not perform sensing in slot m, and selects, in turn, from the resource reservation period set M in the used resource pool configuration a Prx for resource exclusion. For some one of these Prx, if Prx<Tscal and n-m<=Prxlg, assuming that the Q value is calculated as 2, then slot m+q*Prxlg is the slots 441 and 442 identified with horizontal line shadow in FIG. 4 which are mapped by slot m; otherwise, Q=1, and slot m+q*Prxlg is the slot 443 identified with the dotted shadow in FIG. 4.

**Step 1-2:** as shown in FIG. 5, if terminal 1 senses the first sidelink control information transmitted in the PSCCH on resource E(v, m) in slot m within the resource sensing window 42 (v is the frequency domain position of the resource), terminal 1 measures the SL-RSRP of the PSCCH or the SL-RSRP of the PSSCH scheduled by the PSCCH (i.e., the SL-RSRP of the PSSCH sent at the same time as the PSCCH). If the measured SL-RSRP is greater than a SL-RSRP threshold and the resource pool used by terminal 1 activates the resource reservation between TBs, terminal 1 assumes that terminal 1 have received the first sidelink control information with the same content on all slot m+q*Prxlg, where q=1,2,3..,Q, For Q, if Prx< Tscal and n-m<=Prxlg, $$Q= \lceil Tscal/Prx \rceil$$ (representing rounding up); otherwise, Q=1. Tscal is equal to T2. Prxlg is a number after Prx is converted to a logical slot, and Prx is the resource reservation period indicated by "Resource reservation period" in the first sidelink control information transmitted in the PSCCH sensed by terminal 1. Terminal 1 determines whether the resources indicated by the "Time resource assignment" and "Frequency resource assignment" fields of the Q first sidelink control information assumed to have been received and the first sidelink control information received in slot m overlap (fully and partially) with the resource R(x,y+j*Ptxlg); if there is overlap, the corresponding resource R(x,y) is excluded from the resource set A, where j=0,1,2,3...C-1, and C is determined by a random counter value generated by the terminal. Ptxlg is the number after Ptx is converted into a logical slot, and Ptx is the period of resource reservation determined by terminal 1. For example, the resource R(x,y+j*Ptxlg) is the four resources 46 marked with the slash shadow in FIG. 5.

If terminal 1 senses the first sidelink control information in the PSCCH on the resource E(v, m) in slot m and decodes Prx>Tscal and calculates that Q is equal to 1, terminal 1 will assume that first sidelink control information with the same content is received in slot m+Prxlg. Terminal 1 determines whether the resources 1, 2, 3, 4, 5, 6 indicated by the "Time resource assignment" and "Frequency resource assignment" fields of the first sidelink control information assumed to have been received in slot m+Prxlg and the first sidelink control information received in slot m overlap (fully and partially) with the resource R(x,y+j*Ptxlg); if there is overlap, the resource R(x,y) is excluded from the resource set A. If the SL-RSRP measured by terminal 1 is greater than the SL-RSRP threshold and the resource pool used by terminal 1 deactivates the resource reservation between TBs, terminal 1 only determines whether the resources indicated by "Time resource assignment" and "Frequency resource assignment" fields of the first sidelink control informed received in slot m overlap with the resource R(x,y+j*Ptxlg); and if there is overlap, the resource R(x,y) is excluded from the resource set A.

If the remaining resources in resource set A after the above resource exclusion are less than Mtotal*X%, the SL-RSRP threshold is raised by 3 dB and step 1 (including at least one of steps 1-1 and 1-2) is re-executed. The physical layer reports to the higher layer the resource set A after resource exclusion as a candidate resource set.

**Step 2: resource selection procedure;**

After resource exclusion, terminal 1 randomly selects a number of resources from the candidate resource set A to be used by terminal 1 for the initial transmission as well as for retransmission(s).

It should be noted that:

1. The above RSRP threshold is determined by the priority P1 carried in the PSCCH sensed by terminal 1 and the priority P2 of the to-be-transmitted data in terminal 1. Through network configuration or pre-configuration, terminal 1 obtains a SL-RSRP threshold table, which contains SL-RSRP thresholds corresponding to all priority combinations.

For example, as shown in Table 1, assuming that alternative values of both priority P1 and priority P2 are 0-7, the SL-RSRP thresholds corresponding to different priority combinations are denoted by $\gamma_{ij}$, where i in $\gamma_{ij}$ is the value of the priority level P1 and j is the value of the priority level P2.

| P1 / P2 | 0 | 1 | 2 | 3 | 4 | 5 | 6 | 7 |
|---|---|---|---|---|---|---|---|---|
| 0 | $\gamma_{00}$ | $\gamma_{01}$ | $\gamma_{02}$ | $\gamma_{03}$ | $\gamma_{04}$ | $\gamma_{05}$ | $\gamma_{06}$ | $\gamma_{07}$ |
| 1 | $\gamma_{10}$ | $\gamma_{11}$ | $\gamma_{12}$ | $\gamma_{13}$ | $\gamma_{14}$ | $\gamma_{15}$ | $\gamma_{16}$ | $\gamma_{17}$ |
| 2 | $\gamma_{20}$ | $\gamma_{21}$ | $\gamma_{22}$ | $\gamma_{23}$ | $\gamma_{24}$ | $\gamma_{25}$ | $\gamma_{26}$ | $\gamma_{27}$ |
| 3 | $\gamma_{30}$ | $\gamma_{31}$ | $\gamma_{32}$ | $\gamma_{33}$ | $\gamma_{34}$ | $\gamma_{35}$ | $\gamma_{36}$ | $\gamma_{37}$ |
| 4 | $\gamma_{40}$ | $\gamma_{41}$ | $\gamma_{42}$ | $\gamma_{43}$ | $\gamma_{44}$ | $\gamma_{45}$ | $\gamma_{46}$ | $\gamma_{47}$ |
| 5 | $\gamma_{50}$ | $\gamma_{51}$ | $\gamma_{52}$ | $\gamma_{53}$ | $\gamma_{54}$ | $\gamma_{55}$ | $\gamma_{56}$ | $\gamma_{57}$ |
| 6 | $\gamma_{60}$ | $\gamma_{61}$ | $\gamma_{62}$ | $\gamma_{63}$ | $\gamma_{64}$ | $\gamma_{65}$ | $\gamma_{66}$ | $\gamma_{67}$ |
| 7 | $\gamma_{70}$ | $\gamma_{71}$ | $\gamma_{72}$ | $\gamma_{73}$ | $\gamma_{74}$ | $\gamma_{75}$ | $\gamma_{76}$ | $\gamma_{77}$ |

Table 1

When terminal 1 senses a PSCCH transmitted by terminal 2, terminal 1 obtains the priority P1 carried in the first sidelink control information transmitted in the PSCCH and the priority P2 of the to-be-transmitted data packet, and terminal 1 determines the SL-RSRP threshold by checking Table 1.

2. Whether terminal 1 uses the measured PSCCH-RSRP or the PSSCH-RSRP of the PSSCH scheduled by the PSCCH for comparison with the SL-RSRP threshold depends on the resource pool configuration of the resource pool used by terminal 1. The resource pool configuration may be configured by the network, or may be pre-configured.

3. Regarding the above Prxlg/Ptxlg being a number after Prx/Ptx converted into a logical slot, respectively: suppose a slot is equal to 1 millisecond and Prx is 5 milliseconds, among these 5 slots, 2 slots may be a downlink slot in TDD mode or a slot for transmitting a synchronization signal, and these slots are not included in sidelink resource pool, and thus it is needed to convert 5 milliseconds represented by Prx into logical slots (3 slots), i.e. Prxlg.

4. Regarding X%, the possible values of X are {20,35,50}. The configuration of the resource pool used by terminal 1 contains a correspondence between the priorities and the above possible values, and terminal 1 determines the value of X according to the priority of the to-be-transmitted data and this correspondence. The resource pool configuration may be configured by the network, or may be pre-configured.

Re-evaluation and Pre-emption Mechanisms

In addition, it is also supported in NR-V2X that after resource selection is completed, for a first selected resource which has not yet been indicated by transmitting first sidelink control information, the first selected resource may be re-evaluated before the first selected resource is indicated.

As shown in FIG. 6, resources x, y, z, u, and v are selected resources which are selected by terminal 1 in slot n, and resource y is located in slot m. For resources z and u which are to be first indicated by terminal 1 by transmitting first sidelink control information on resource y (resource y has already been indicated by first sidelink control information on resource x), terminal 1 performs the resource exclusion procedure in step 1 above once at least in slot m-T3, i.e., terminal 1 determines the resource selection window and the resource sensing window at least in slot m-T3 as described above, and performs step 1 above to perform resource exclusion for resources in the resource selection window to obtain a candidate resource set. If resource z or u is not in the candidate resource set, terminal 1 performs step 2 above to perform reselection for a time and frequency resource in resources z and u that is not in the candidate resource set, or terminal 1 may perform reselection for any resource that has been selected but is not indicated by transmitting the first sidelink control information, such as any some of resources z, u and v. The above T3 is equal to $T_{proc,1}$. In FIG. 6, the dashed arrows indicate that the first sidelink control information indication is to be transmitted, and the solid arrows indicate that the first sidelink control information indication has been transmitted.

NR-V2X also supports a resource pre-emption mechanism. In NR-V2X, conclusions about the resource pre-emption mechanism are described from the perspective of a pre-empted terminal. After completing the resource selection, terminal 1 still continuously performs sensing of first sidelink control information, and if a selected resource that has been indicated by transmitting the first sidelink control information satisfies the following three conditions, it means that the selected resource is pre-empted by other terminal(s) and terminal 1 triggers resource reselection for the selected resource.

Condition 1: a resource reserved in the sensed first sidelink control information overlaps with the selected resource that has been indicated by terminal 1, including full overlap and partial overlap.

Condition 2: the SL-RSRP of the PSCCH corresponding to the first sidelink control information sensed by terminal 1 or the SL-RSRP of the PSSCH scheduled by the PSCCH is greater than the SL RSRP threshold.

Condition 3: the priority carried in the sensed first sidelink control information is higher than the priority of the to-be-transmitted data by terminal 1.

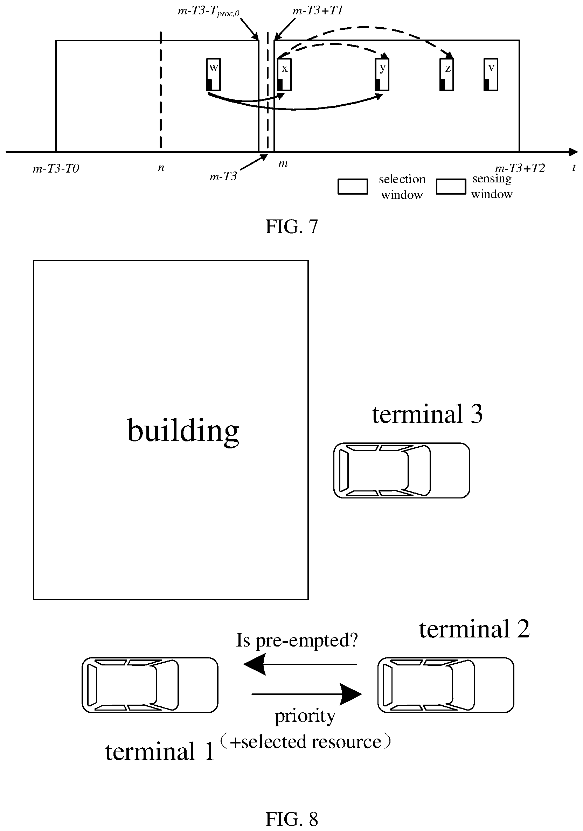

As shown in FIG. 7, resources w, x, y, z, and v are time and frequency resources that have been selected by terminal 1 in slot n. Resource x is located in slot m. For resources x and y which are to be indicated by terminal 1 by transmitting first sidelink control information on the resource x and have been indicated by first sidelink control information previously transmitted by terminal 1, terminal 1 performs above step 1 once at least in slot m-T3, i.e., terminal 1 determines the resource selection window and the resource sensing window at least in slot m-T3 as described above, and performs step 1 above to perform resource exclusion for resources in the resource selection window to obtain a candidate resource set. If resource x or y is not in the candidate resource set (satisfying conditions 1 and 2 above), terminal 1 further determines whether the resource x or y not being in the candidate resource set is due to the indication of the first sidelink control information carrying a high priority (the priority is higher than the priority of the to-be-transmitted data by terminal 1) (satisfying condition 3 above); and if yes, terminal 1 performs step 2 to perform reselection for a time and frequency resource in the resources x and y which satisfies the above three conditions. In addition, when resource reselection is triggered, terminal 1 may reselect any resource that has been selected but is not indicated by transmitting first sidelink control information, such as any one or more of resources z and v. The above T3 is equal to $T_{proc,1}$.

The SL-RSRP above is a linear average of the received power on all Resource Elements (REs) in the PSCCH or PSSCH that carry a reference signal (DMRS or CSI-RS). When the PSSCH is transmitted using multiple antenna ports, the SL-RSRP is the sum of SL-RSRP measured at each antenna port.

Terminal 1 may be affected by a hidden station problem when re-evaluating a selected resource or determining whether the selected resource is pre-empted by other terminals. As shown in FIG. 8, terminal 1 determines whether a selected resource 1 is pre-empted by other terminal(s). The priority of the service of terminal 3 is higher than that of terminal 1, and terminal 3 also selects resource 1, i.e., terminal 3 pre-empts resource 1. However, due to the influence of building blocking, terminal 1 is unable to correctly decode the first sidelink control information from terminal 3 or terminal 1 measures that the SL-RSRP of the signal transmitted by terminal 3 is low, and thus terminal 1 considers that terminal 3 does not pre-empt the resource of terminal 1. This results in that terminal 1 and terminal 3 sharing the same time and frequency resource, i.e., resource 1. However, in reality, terminal 1 and terminal 3 are not very far apart, which results in that a common receiver of terminal 1 and terminal 3 will receive signals from both at the same time, thereby causing reduced communication reliability. In particular, terminal 1 does not avoid the high-priority service of terminal 3, and as a result the high-priority service is affected.

The present disclosure introduces a collaboration mechanism between UEs, such as a collaboration mechanism between terminal 1 and terminal 2 in FIG. 8, to solve the above-mentioned hidden station problem.

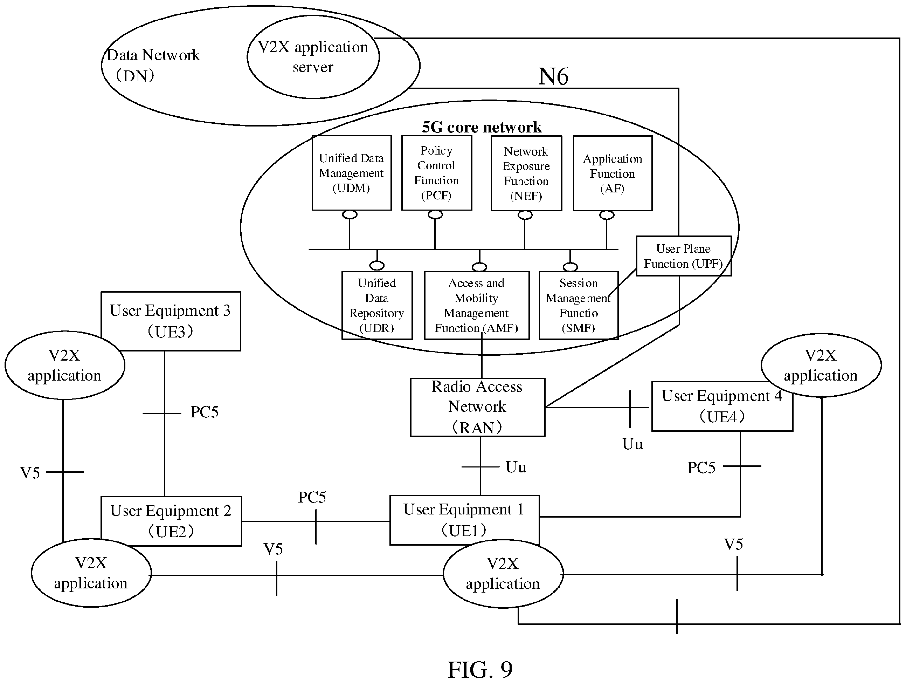

FIG. 9 illustrates a block diagram of a communication system supporting sidelink transmission according to an example embodiment of the present disclosure. The communication system may be a schematic diagram of a Non-roaming 5G system architecture that may be applied to Vehicle to everything (V2X) services using the D2D technology.

The system architecture includes a Data Network (DN). The data network is provided with a V2X Application Server required for V2X services. The system architecture further includes a 5G core network. The network functions of the 5G core network includes: Unified Data Management (UDM), Policy Control Function (PCF), Network Exposure Function (NEF), Application Function (AF), Unified Data Repository (UDR), Access and Mobility Management Function (AMF), Session Management Function (SMF), and User Plane Function (UPF).

The system architecture further includes a New Generation-Radio Access Network (NG-RAN) and four exemplary terminals (i.e., terminals 1 to 4). Each of the terminals is equipped with a V2X application. One or more access network devices, such as a base station (gNB), are provided in the wireless access network. The terminals perform uplink transmission to the access network device.

In this system architecture, the data network is connected to the user plane function in the 5G core network through the N6 reference point, and the V2X application server is connected to the V2X application in the terminals through the V1 reference point; the wireless access network is connected to the AMF function and the UPF function in the 5G core network, and the wireless access network is connected to terminal 1 and terminal 5 through the Uu reference point, respectively. Multiple terminals perform sidelink transmission through the PC5 reference point, and multiple V2X applications are connected to each other via the V5 reference point. These reference points may also be referred to as "interfaces".

**Inter-UE collaboration in the re-evaluation stage:**

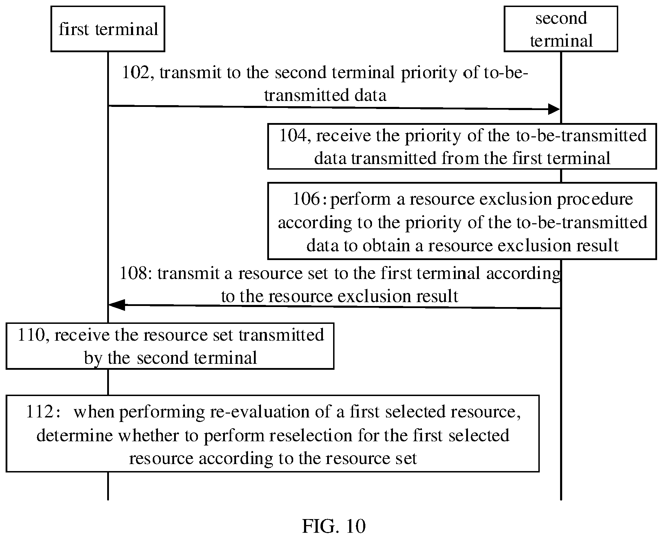

FIG. 10 illustrates a flowchart of a resource reselection method according to an example embodiment of the present disclosure. This embodiment is exemplified by the application of the method to at least two terminals as shown in FIG. 9. The method includes.

In step 102, a first terminal transmits to a second terminal priority of to-be-transmitted data,

The second terminal is a terminal located around the first terminal. The first terminal and the second terminal are located in different geographical locations. In the examples below, the first terminal is referred to as terminal 1 and the second terminal is referred to as terminal 2.

The first terminal uses the resource exclusion procedure and the resource selection procedure described above to select a first selected resource. The first selected resource is a resource that has been selected by the first terminal and is not indicated by first sidelink control information. As an example, the resource exclusion procedure is shown in step 1 above and the resource selection procedure is shown in step 2 above.

The priority of the to-be-transmitted data is carried using at least one of the following information: PCS-RRC signaling; MAC CE; first sidelink control information; and second sidelink control information. That is, the first terminal transmits PCS-RRC signaling to the second terminal, and the PC5-RRC signaling carries the priority of the to-be-transmitted data. Or, the first terminal transmits MAC CE to the second terminal, and the MAC CE carries the priority of the to-be-transmitted data. Or, the first terminal transmits first sidelink control information to the second terminal, and the first sidelink control information carries the priority of the to-be-transmitted data. Or, the first terminal transmits the second sidelink control information to the second terminal, and the second sidelink control information carries the priority of the to-be-transmitted data.

The first sidelink control information is sidelink control information carried in the PSCCH, and the second sidelink control information is sidelink control information carried in the PSSCH.

In step 104, the second terminal receives the priority of the to-be-transmitted data transmitted from the first terminal.

The second terminal receives the PC5-RRC signaling transmitted from the first terminal, and the PC5-RRC signaling carries the priority of the to-be-transmitted data. Or, the second terminal receives the MAC CE transmitted from the first terminal, and the MAC CE carries the priority of the to-be-transmitted data. Or, the second terminal receives the first sidelink control information transmitted from the first terminal, and the first sidelink control information carries the priority of the to-be-transmitted data. Or, the second terminal receives the second sidelink control information transmitted from the first terminal, and the second sidelink control information carries the priority of the to-be-transmitted data.

In step 106, the second terminal performs a resource exclusion procedure according to the priority of the to-be-transmitted data to obtain a resource exclusion result.

The second terminal determines a resource selection window and a resource sensing window, performs a resource exclusion procedure according to the priority of the to-be-transmitted data, and obtains a resource exclusion result. As an example, the resource exclusion procedure may use the procedure shown in step 1 above. As an example, the resource exclusion result includes: a candidate resource set determined by step 1 above (i.e., the set of resources not excluded), and/or, a set of resources excluded by step 1 above.

According to a first alternative of the invention, a parameter related to the resource exclusion procedure is determined by the second terminal itself, and the parameter includes a first parameter related to the resource selection window, and may optionally further include, a second parameter related to the resource sensing window. According to a second alternative of the invention, the parameter related to the resource exclusion procedure is transmitted by the first terminal to the second terminal, and in some embodiments the parameter is carried in at least one of the following information: PCS-RRC signaling; MAC CE; first sidelink control information; and second sidelink control information.

In step 108, the second terminal transmits a resource set to the first terminal according to the resource exclusion result.

The second terminal determines, according to the resource exclusion result, at least one of the following resource sets:

- a first resource set, wherein the first resource set includes a resource excluded during the resource exclusion procedure;
- a first resource subset, wherein the first resource subset is a subset of the first resource set;
- a second resource set, wherein the second resource set is a resource not excluded in the resource exclusion procedure;
- a second resource subset, wherein the second resource subset is a subset of the second resource set.

The second terminal transmits the first resource set to the first terminal; or, the second terminal transmits the first resource subset to the first terminal; or, the second terminal transmits the second resource set to the first terminal; or, the second terminal transmits the second resource subset to the first terminal.

Embodiments of the present disclosure do not limit the way of indicating the above-mentioned resource set(s), and the resource(s) in the above-mentioned resource set(s) may be indicated by using time-frequency position(s), or, by using resource index(indexes), or, by using a bitmap.

In step **110,** the first terminal receives the resource set transmitted by the second terminal. The resource set is used to indicate the resource exclusion result obtained by the resource exclusion procedure determined by the second terminal according to the priority of the to-be-transmitted data.

In step **112,** when the first terminal re-evaluates a first selected resource, the first terminal determines whether to perform reselection for the first selected resource according to the resource set.

In the re-evaluation of the first selected resource, the first terminal determines a candidate resource set according to the continuous sensing result. And, in combination with the resource set transmitted by the second terminal, the first terminal performs at least one of the following steps:

When the first selected resource belongs to the first resource set, the first terminal performs reselection for the first selected resource in a first reselection resource set; resource(s) in the first reselection resource set belongs(belong) to the candidate resource set and does(do) not belong to the first resource set.
When the first selected resource belongs to the first resource subset, the first terminal performs reselection for the first selected resource in a second reselection resource set; resource(s) in the second reselection resource set belongs(belong) to the candidate resource set and does(do) not belong to the first resource subset.
When the first selected resource does not belong to the second resource set, the first terminal performs reselection for the first selected resource in a third reselection resource set; resource(s) in the third reselection resource set belongs(belong) to the candidate resource set and belongs(belong) to the second resource set.
When the first selected resource does not belong to the second resource subset, the first terminal performs reselection for the first selected resource in a fourth reselection resource set; resource(s) in the fourth reselected resource set belongs(belong) to the candidate resource set and belongs(belong) to the second resource subset.

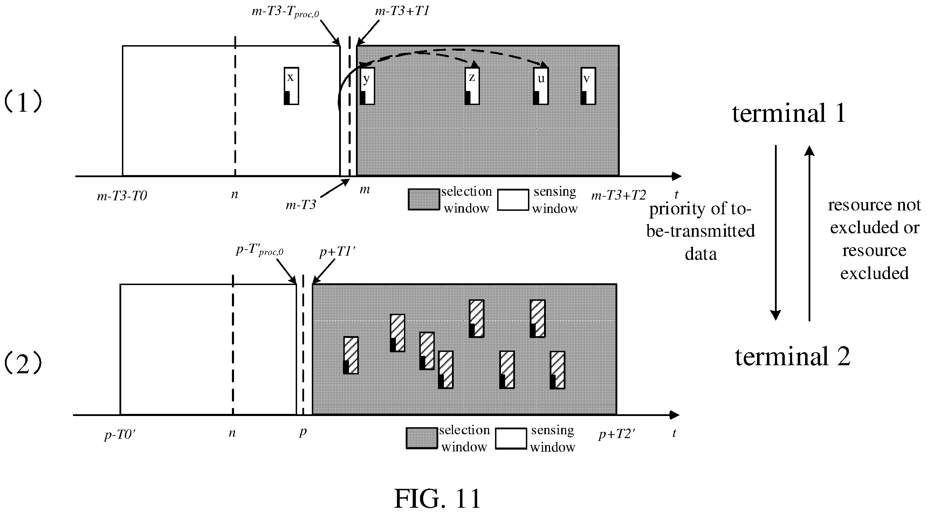

As shown in subfigure 1 of FIG. 11, resources x, y, z, u, and v are time and frequency resources that have been selected by terminal 1 in slot n, and resource y is located in slot m. For resources z and u which are to be first indicated by terminal 1 by transmitting first sidelink control information on resource y (resource y has already been indicated by first sidelink control information on resource x), terminal 1 performs re-evaluation of resources z and u once at least in slot m-T3, and resources z and u are noted as first selected resources. Before terminal 1 re-evaluates the first selected resources, terminal 1 indicates to terminal 2 the priority of the to-be-transmitted data. Terminal 2 determines the resource selection window (from p+Tl' to p+T2') and the resource sensing window (from p-T0' to p-T'$_{proc,0}$) in slot p, and performs the resource exclusion procedure in above step 1. Terminal 2 feeds the following to terminal 1:

resource(s) excluded from resource set A in step 1;
or, a subset of the resource(s) excluded from resource set A;
or, resource(s) remaining in resource set A after resource exclusion (i.e., the candidate resource set constructed in step 1, such as the resources marked with shadow in subfigure 2 of FIG. 11);
or, a subset of the resource(s) remaining in resource set A after resource exclusion.

The time moment of information interaction between terminal 1 and terminal 2 as described above, and the determination of the subset depends on the terminal implementation. T1', T2', T0', T'$_{proc,0}$ may either depend on the internal implementation of terminal 2, or may be indicated by terminal 1 to terminal 2. As an example, the above slot p = time moment t+i, t is the time moment when terminal 1 transmits to terminal 2 the priority of the to-be-transmitted data, and i depending on the internal implementation of terminal 2.

In an example, it is needed that the above parameter can ensure, as far as possible, that the resource selection window determined by terminal 2 contains all the first selected resources. The above-mentioned means of information interaction between terminal 1 and terminal 2 may be via PC5-RRC signaling, may be carried via MAC CE, or may be indicated by first sidelink control information or second sidelink control information. The first sidelink control information is control information carried in the PSCCH, and the second sidelink control information is control information carried in the PSSCH.

**In a case where terminal 2 indicates excluded resources (first resource set) or a subset of the excluded**

**resources (first resource subset):**

When terminal 1 re-evaluates first selected resources, if there is a first selected resource in the resources indicated by terminal 2, terminal 1 performs reselection for the resource among the first selected resources that appears in the resource set indicated by terminal 2. Terminal 1 determines the resource selection window and the resource sensing window according to the current time moment, performs step 1 above to determine the candidate resource set, and performs reselection for the resource among the first selected resources for which reselection is needed from resources which belong to the candidate resource set but do not belong to the resource set indicated by the terminal 2. Depending on the terminal implementation, terminal 1 may reselect any first selected resource from resources which belong to the candidate resource set but do not belong to the resource set indicated by terminal 2.

**In a case where terminal 2 indicates non-excluded resources (second resource set) or a subset of the non-excluded resources (second resource subset):**

When terminal 1 re-evaluates first selected resources, if there is a first selected resource not in the resources indicated by terminal 2, terminal 1 performs reselection for the resource among the first selected resources that does not appear in the resource set indicated by terminal 2. Terminal 1 determines the resource selection window and the resource sensing window according to the current time moment, performs step 1 above to determine the candidate resource set, and performs reselection for the resource among the first selected resources for which reselection is needed from an intersection set which belongs to the candidate resource set and belongs to the resource set indicated by the terminal 2. Depending on the terminal implementation, terminal 1 may reselect any first selected resource from the intersection set which belongs to the candidate resource set and belongs to the resource set indicated by terminal 2.

The dotted arrows in FIG. 11 indicate that the first sidelink control information indication is about to be transmitted (but not yet transmitted), and the solid arrows indicate that the first sidelink control information indication has been transmitted.

In summary, in the methods provided in the embodiments, through the collaboration between the first terminal and the second terminal, the second terminal helps the first terminal with the resource exclusion procedure to obtain the resource set. The first terminal uses the resource set transmitted by the second terminal as assistance information to provide assistance in the reselection procedure in the re-evaluation stage, thereby effectively eliminating the impact of the hidden station problem on the re-evaluation stage of the first terminal.

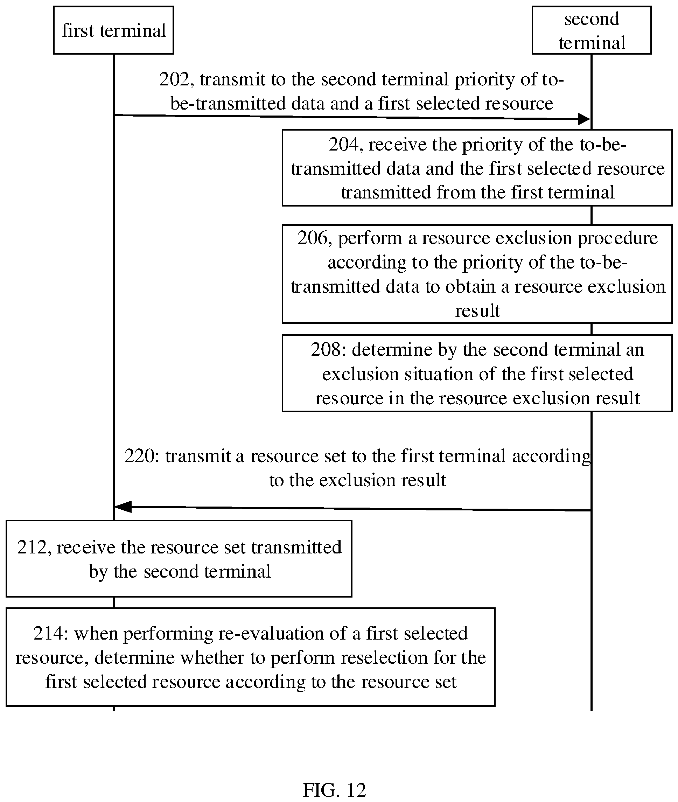

FIG. 12 illustrates a flowchart of a resource reselection method according to another example embodiment of the present disclosure. This embodiment is exemplified by the application of the method to at least two terminals as shown in FIG. 9. The method includes.

**In step 202,** a first terminal transmits to a second terminal priority of to-be-transmitted data and a first selected resource.

The second terminal is a terminal located around the first terminal. The first terminal and the second terminal are located in different geographical locations.

The first terminal uses the resource exclusion procedure and the resource selection procedure described above to select a first selected resource. The first selected resource is a resource that has been selected by the first terminal and is not indicated to other terminal(s) by first sidelink control information. As an example, the resource exclusion procedure is shown in step 1 above and the resource selection procedure is shown in step 2 above.

The priority of the to-be-transmitted data may be transmitted concurrently with the first selected resource, or the priority of the to-be-transmitted data and the first selected resource may be transmitted separately. The priority of the to-be-transmitted data and the first selected resource may be transmitted with both of them being carried in the same information, or the priority of the to-be-transmitted data and the first selected resource may be transmitted with both of them being carried in different information.

As an example, the priority of the to-be-transmitted data is carried using at least one of the following information: PCS-RRC signaling; MAC CE; first sidelink control information; and second sidelink control information. That is, the first terminal transmits PCS-RRC signaling to the second terminal, and the PC5-RRC signaling carries the priority of the to-be-transmitted data. Or, the first terminal transmits MAC CE to the second terminal, and the MAC CE carries the priority of the to-be-transmitted data. Or, the first terminal transmits first sidelink control information to the second terminal, and the first sidelink control information carries the priority of the to-be-transmitted data. Or, the first terminal transmits the second sidelink control information to the second terminal, and the second sidelink control information carries the priority of the to-be-transmitted data.

As an example, the first selected resource is carried using at least one of the following information: PCS-RRC signaling; MAC CE; first sidelink control information; and second sidelink control information. That is, the first terminal transmits PCS-RRC signaling to the second terminal, and the PC5-RRC signaling carries the first selected resource. Or, the first terminal transmits MAC CE to the second terminal, and the MAC CE carries the first selected resource. Or, the first terminal transmits first sidelink control information to the second terminal, and the first sidelink control information carries the first selected resource. Or, the first terminal transmits the second sidelink control information to the second terminal, and the second sidelink control information carries the first selected resource.

The first sidelink control information is sidelink control information carried in the PSCCH, and the second sidelink control information is sidelink control information carried in the PSSCH.

**In step 204,** the second terminal receives the priority of the to-be-transmitted data and the first selected resource transmitted from the first terminal.

The second terminal may concurrently receive the priority of the to-be-transmitted and the first selected resource from the first terminal, or may receive the both separately. The priority of the to-be-transmitted and the first selected resource may be received in the same piece of information, or may be received separately in different information.

As an example, the second terminal receives the PC5-RRC signaling transmitted from the first terminal, and the PC5-RRC signaling carries the priority of the to-be-transmitted data. Or, the second terminal receives the MAC CE transmitted from the first terminal, and the MAC CE carries the priority of the to-be-transmitted data. Or, the second terminal receives the first sidelink control information transmitted from the first terminal, and the first sidelink control information carries the priority of the to-be-transmitted data. Or, the second terminal receives the second sidelink control information transmitted from the first terminal, and the second sidelink control information carries the priority of the to-be-transmitted data.

As an example, the second terminal receives the PC5-RRC signaling transmitted from the first terminal, and the PC5-RRC signaling carries the first selected resource. Or, the second terminal receives the MAC CE transmitted from the first terminal, and the MAC CE carries the first selected resource. Or, the second terminal receives the first sidelink control information transmitted from the first terminal, and the first sidelink control information carries the first selected resource. Or, the second terminal receives the second sidelink control information transmitted from the first terminal, and the second sidelink control information carries the first selected resource. The first selected resource may be represented by a time-frequency position, or may be represented by a resource index.

**In step 206,** the second terminal performs a resource exclusion procedure according to the priority of the to-be-transmitted data to obtain a resource exclusion result.

The second terminal determines a resource selection window and a resource sensing window, performs a resource exclusion procedure according to the priority of the to-be-transmitted data, and obtains a resource exclusion result. As an example, the resource exclusion procedure may use the procedure shown in step 1 above. As an example, the resource exclusion result includes: a candidate resource set determined by step 1 above (i.e., the set of resources not excluded), and/or, a set of resources excluded by step 1 above.

According to some embodiments, a parameter related to the resource exclusion procedure is determined by the second terminal itself, and the parameter includes a first parameter related to the resource selection window, and/or, a second parameter related to the resource sensing window. According to some embodiments, the parameter related to the resource exclusion procedure is transmitted by the first terminal to the second terminal in advance, and the parameters is carried in at least one of the following information: PCS-RRC signaling; MAC CE; first sidelink control information; and second sidelink control information.

**In step 208,** the second terminal determines an exclusion situation of the first selected resource in the resource exclusion result.

After obtaining the resource exclusion result, the second terminal determines whether the first selected resource is excluded according to the set of excluded resources and/or set of resources not excluded, i.e., the exclusion situation of the first selected resource.

**In step 210,** the second terminal transmits a resource set to the first terminal according to the exclusion situation of the first selected resource.

The second terminal determines, according to the exclusion situation of the first selected resource, at least one of the following resource sets:

- a third resource set, wherein the third resource set includes a first selected which is excluded in the resource exclusion procedure;
- a third resource subset, wherein the third resource subset is a subset of the third resource set;
- a fourth resource set, wherein the fourth resource set includes a first selected resource not excluded in the resource exclusion procedure;
- a fourth resource subset, wherein the fourth resource subset is a subset of the fourth resource set;
- the third resource set and the fourth resource set.

The second terminal transmits the determined resource set(s) to the first terminal. The second terminal transmits the third resource set to the first terminal; or, the second terminal transmits the third resource subset to the first terminal; or, the second terminal transmits the fourth resource set to the first terminal; or, the second terminal transmits the fourth resource subset to the first terminal; or, the second terminal transmits the third resource set and the fourth resource set to the first terminal.

Embodiments of the present disclosure do not limit the way of indicating the above-mentioned resource set(s), and the resource(s) in the above-mentioned resource set(s) may be indicated by using time-frequency position(s), or, by using resource index(indexes), or, by using a bitmap. For example, if the first selected resources include a resource 1 and a resource 2, and the time-frequency position of resource 1 is before the time-frequency position of resource 2, the terminal 2 uses two bits "10" to represent the third resource set and the fourth resource set. The bit "1" in "10" represents that resource 1 is excluded in the resource exclusion procedure, and the bit "0" in "10" represents that resource 2 is not excluded in the resource exclusion procedure.

**In step 212,** the first terminal receives the resource set transmitted by the second terminal. The resource set is used to indicate the resource exclusion result obtained by the resource exclusion procedure determined by the second terminal according to the priority of the to-be-transmitted data.

The resource set is carried using at least one of the following information: PCS-RRC signaling; MAC CE; first sidelink control information; and second sidelink control information.

**In step 214,** when the first terminal re-evaluates a first selected resource, the first terminal determines whether to perform reselection for the first selected resource according to the resource set.

When the first selected resource belongs to the third resource set or the third resource subset, the first terminal performs reselection for the first selected resource in the candidate resource set.

When the first selected resource does not belong to the fourth resource set or the fourth resource subset, the first terminal performs reselection for the first selected resource in the candidate resource set.

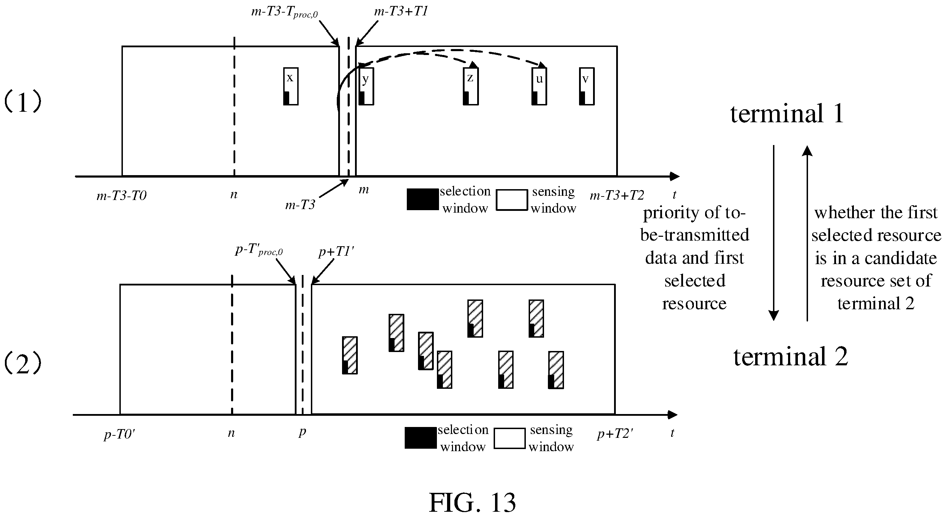

As shown in subfigure 1 of FIG. 13, resources x, y, z, u, and v are time and frequency resources that have been selected by terminal 1 in slot n, and resource y is located in slot m. For resources z and u which are to be first indicated by terminal 1 by transmitting first sidelink control information on resource y (resource y has already been indicated by first sidelink control information on resource x), terminal 1 performs re-evaluation of resources z and u at least in slot m-T3, and resources z and u are noted as first selected resources. Before terminal 1 re-evaluates the first selected resources, terminal 1 indicates to terminal 2 the priority of the to-be-transmitted data and at least one first selected resource. Terminal 2 determines the resource selection window (from p+ Tl' to p+T2') and the resource sensing window (from p-T0' to p-T'$_{proc,0}$) in slot p, and performs the resource exclusion procedure in above step 1 to determine the candidate resource set. Terminal 2 indicates to terminal 1 a first selected resource which is in or not in the candidate resource set, or terminal 2 provides indication for each of the at least one first selected resource regarding whether each first selected resource is in the candidate resource set.

The time moment of information interaction between terminal 1 and terminal 2 and the determination of the subset depends on the terminal implementation. Parameters Tl', T2', T0', T'$_{proc,0}$ may either depend on the internal implementation of terminal 2, or may be indicated by terminal 1 to terminal 2. As an example, the parameters need to ensure that the resource selection window determined by terminal 2 contains all of first selected resources. As an example, the above slot p = time moment t+i, t is the time moment when terminal 1 transmits to terminal 2 the priority of the to-be-transmitted data, and i depending on the internal implementation of terminal 2.

The above-mentioned means of information interaction between terminal 1 and terminal 2 may be via PC5-RRC signaling, may be carried via MAC CE, or may be indicated by first sidelink control information or second sidelink control information.

When terminal 1 re-evaluates first selected resources, according to the indication information from terminal 2 with respect to the first selected resources of terminal 1, terminal 1 performs reselection for a resource among the first selected resources which is not in the candidate resource determined by terminal 2. Terminal 1 determines the resource selection window and the sensing window according to the current time moment, performs step 1 above to determine the candidate resource set, and performs reselection for the resource among the first selected resources for which reselection is needed from the candidate resource set. Depending on the terminal implementation, terminal 1 may reselect any first selected resource from the candidate resource set.

The dotted arrows in FIG. 13 indicate that the first sidelink control information indication is about to be transmitted (but not yet transmitted), and the solid arrows indicate that the first sidelink control information indication has been transmitted.

In summary, in the methods provided in the embodiments, through the collaboration between the first terminal and the second terminal, the second terminal helps the first terminal with the resource exclusion procedure to obtain the resource set. The first terminal uses the resource set transmitted by the second terminal as assistance information to provide assistance in the reselection procedure in the re-evaluation stage, thereby effectively eliminating the impact of the hidden station problem on the re-evaluation stage of the first terminal.

In the methods provided in the embodiments, the first terminal also transmits (the time-frequency position or resource index) of at least one first selected resource to the second terminal, so that the second terminal can provide accurate feedback regarding the exclusion situation of the first selected resource. Thus, the effective collaboration between the first terminal and the second terminal may be realized with less datalinformation volume.

In the example embodiments based on FIG. 10 and FIG. 12, when the second terminal determines that the at least one first selected resource is not excluded, the second terminal may not transmit the resource set to the first terminal.

**For inter-UE collaboration in the stage for determining whether a selected resource is pre-empted by other terminals, the following embodiments are provided:**

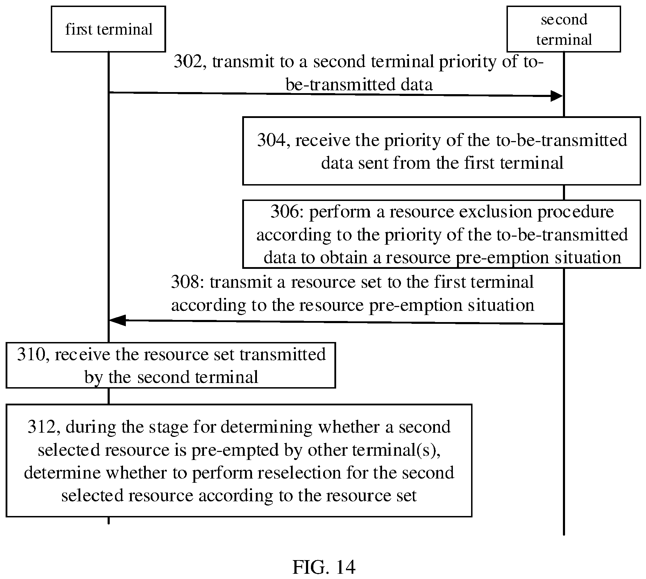

FIG. 14 illustrates a flowchart of a resource reselection method according to an example embodiment of the present disclosure. This embodiment is exemplified by the application of the method to at least two terminals as shown in FIG. 9. The method includes.

**In step 302,** a first terminal transmits to a second terminal priority of to-be-transmitted data,

The second terminal is a terminal located around the first terminal. The first terminal and the second terminal are located in different geographical locations.

The first terminal uses the resource exclusion procedure and the resource selection procedure described above to select a second selected resource. The second selected resource is a resource that has been selected by the first terminal and is indicated to other terminals by first sidelink control information. As an example, the resource exclusion procedure is shown in step 1 above and the resource selection procedure is shown in step 2 above.

The priority of the to-be-transmitted data is carried using at least one of the following information: PCS-RRC signaling; MAC CE; first sidelink control information; and second sidelink control information. That is, the first terminal transmits PCS-RRC signaling to the second terminal, and the PC5-RRC signaling carries the priority of the to-be-transmitted data. Or, the first terminal transmits MAC CE to the second terminal, and the MAC CE carries the priority of the to-be-transmitted data. Or, the first terminal transmits first sidelink control information to the second terminal, and the first sidelink control information carries the priority of the to-be-transmitted data. Or, the first terminal transmits the second sidelink control information to the second terminal, and the second sidelink control information carries the priority of the to-be-transmitted data.

The first sidelink control information is sidelink control information carried in the PSCCH, and the second sidelink control information is sidelink control information carried in the PSSCH.

**In step 304,** the second terminal receives the priority of the to-be-transmitted data transmitted from the first terminal.

The second terminal receives the PC5-RRC signaling transmitted from the first terminal, and the PC5-RRC signaling carries the priority of the to-be-transmitted data. Or, the second terminal receives the MAC CE transmitted from the first terminal, and the MAC CE carries the priority of the to-be-transmitted data. Or, the second terminal receives the first sidelink control information transmitted from the first terminal, and the first sidelink control information carries the priority of the to-be-transmitted data. Or, the second terminal receives the second sidelink control information transmitted from the first terminal, and the second sidelink control information carries the priority of the to-be-transmitted data.

**In step 306,** the second terminal performs a resource exclusion procedure according to the priority of the to-be-transmitted data to obtain a resource pre-emption situation.

The second terminal determines a resource selection window and a resource sensing window, performs a resource exclusion procedure according to the priority of the to-be-transmitted data, and obtains a resource exclusion result. As an example, the resource exclusion procedure may be as shown in step 1 above. As an example, the resource exclusion result includes: a candidate resource set determined by step 1 above (i.e., the set of resources not excluded), and/or, a set of resources excluded by step 1 above.

The resource pre-emption situation is obtained by determining whether there is a time and frequency resource indicated by first sidelink control information carrying a high priority in the resource exclusion result. The resource pre-emption situation is used to indicate a pre-empted resource and/or an unpreempted resource. The pre-empted resource is a time and frequency resource indicated by first sidelink control information carrying a high priority transmitted from other terminal(s). The high priority is higher than the priority of the to-be-transmitted data, or the high priority is higher than the priority of the to-be-transmitted data and higher than a priority threshold. The priority threshold is a threshold configured by a network or is a pre-configured threshold.

According to some embodiments, a parameter related to the resource exclusion procedure is determined by the second terminal itself, and the parameter includes a first parameter related to the resource selection window, and/or, a second parameter related to the resource sensing window. According to some embodiments, the parameter related to the resource exclusion procedure is transmitted by the first terminal to the second terminal in advance, and the parameters is carried in at least one of the following information: PCS-RRC signaling; MAC CE; first sidelink control information; and second sidelink control information.

**In step 308,** the second terminal transmits a resource set to the first terminal according to the resource pre-emption situation.

The second terminal determines, according to the pre-emption situation, at least one of the following resource sets:

- a fifth resource set, wherein the fifth resource set is used to indicate a pre-empted resource determined in the resource exclusion procedure;
- a fifth resource subset, wherein the fifth resource subset is a subset of the fifth resource set;

- a sixth resource set, wherein the sixth resource set is used to indicate a resource which is not pre-empted and is determined in the resource exclusion procedure;
- a sixth resource subset, wherein the sixth resource subset is a subset of the sixth resource set.

The second terminal transmits the fifth resource set to the first terminal; or, the second terminal transmits the fifth resource subset to the first terminal; or, the second terminal transmits the sixth resource set to the first terminal; or, the second terminal transmits the sixth resource subset to the first terminal.

Embodiments of the present disclosure do not limit the way of indicating the above-mentioned resource set(s), and the resource(s) in the above-mentioned resource set(s) may be indicated by using time-frequency position(s), or, by using resource index(indexes), or, by using a bitmap.

**In step 310,** the first terminal receives the resource set transmitted by the second terminal. The resource set is used to indicate the resource pre-emption obtained by the resource exclusion procedure determined by the second terminal according to the priority of the to-be-transmitted data.

**In step 312,** when the first terminal determines whether a second selected resource is pre-empted by other terminal(s), the first terminal determines whether to perform reselection for the second selected resource according to the resource set.

When the first terminal determines whether the second selected resource is pre-empted by other terminal(s), the first terminal determines a candidate resource set according to the continuous sensing result. And, in combination with the resource set transmitted by the second terminal, the first terminal performs at least one of the following steps:

When the second selected resource belongs to the fifth resource set, the first terminal performs reselection for the second selected resource in a fifth reselection resource set or performs reselection for the second selected resource in a candidate resource set, wherein resource(s) in the fifth reselection resource set belongs(belong) to the candidate resource set but does(do) not belong to the fifth resource set.

When the second selected resource belongs to the fifth resource subset, the first terminal performs reselection for the second selected resource in a sixth reselection resource set or performs reselection for the second selected resource in the candidate resource set, wherein resource(s) in the sixth reselection resource set belongs(belong) to the candidate resource set but does(do) not belong to the fifth resource subset.

When the second selected resource does not belong to the sixth resource set, the first terminal performs reselection for the second selected resource in a seventh reselection resource set or performs reselection for the second selected resource in a candidate resource set, wherein resource(s) in the seventh reselection resource set belongs(belong) to the candidate resource set and belongs(belong) to the sixth resource set.

When the second selected resource does not belong to the sixth resource subset, the first terminal performs reselection for the second selected resource in an eighth reselection resource set or performs reselection for the second selected resource in the candidate resource set, wherein resource(s) in the eighth reselection resource set belongs(belong) to the candidate resource set and belongs(belong) to the sixth resource subset.

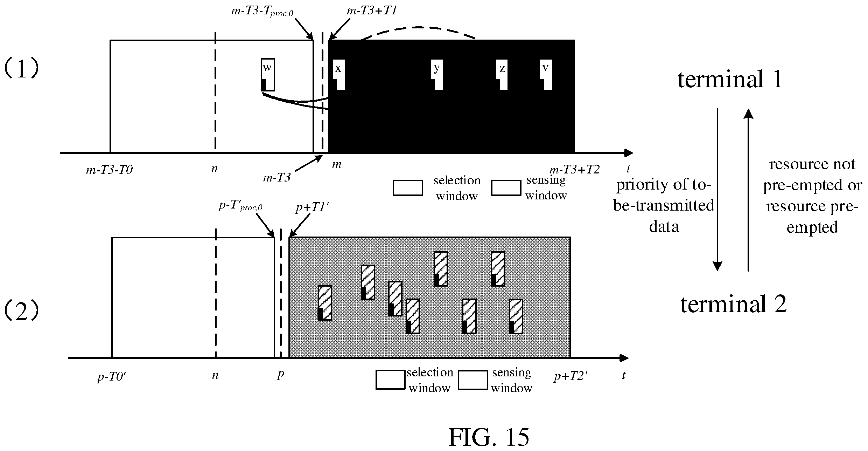

As shown in subfigure 1 of FIG. 15, resources w, x, y, z, and v are time and frequency resources that have been selected by terminal 1 in slot n, and resource x is located in slot m. For resources x and y which are to be indicated by terminal 1 by transmitting first sidelink control information on the resource x and have been indicated by first sidelink control information previously transmitted by terminal 1, terminal 1 performs determination once about whether resources x and y are pre-empted by other terminal(s) at least in slot m-T3, and resources x and y are noted as second selected resources. Before terminal 1 determines whether the second selected resources are pre-empted, terminal 1 indicates to terminal 2 the priority of the to-be-transmitted data. Terminal 2 determines the resource selection window (from p+T1' to p+T2') and the resource sensing window (from p-T0' to p-T'$_{proc,0}$) in slot p, and performs the resource exclusion procedure in above step 1 according to the priority of the to-be-transmitted data of terminal 1. Terminal 2 further determines whether each resource excluded from the resource set A in the above step 1 is excluded because indication of first sidelink control information which carries a high priority; if yes, terminal 2 takes the resource as a pre-empted resource. The high priority refers to a priority which is higher than the priority of the to-be-transmitted data. If the network device configures or pre-configures a priority threshold f, the high priority needs to be higher than a priority corresponding to f.

Terminal 2 indicates to terminal 1 the (subset of) the pre-empted resource(s) or terminal 2 indicates to terminal 1 the (subset of) unpreempted resource(s). The unpreempted resource(s) includes(include) resource(s) other than the pre-empted resource(s) among all available resources in the resource selection window.

As an example, the time moment of information interaction between terminal 1 and terminal 2 as described above, and the determination of the subset depends on the terminal implementation. T1', T2', T0', T'$_{proc,0}$ may either depend on the internal implementation of terminal 2, or may be indicated by terminal 1 to terminal 2, and need to ensure that the resource selection window determined by terminal 2 contains all second selected resources. As an example, the above slot p = time moment t+i, t is the time moment when terminal 1 transmits to terminal 2 the priority of the to-be-transmitted data, and i depending on the internal implementation of terminal 2.

The above-mentioned means of information interaction between terminal 1 and terminal 2 may be via PC5-RRC signaling, may be carried via MAC CE, or may be indicated by first sidelink control information or second sidelink control information.

**In a case where terminal 2 indicates pre-empted resources (fifth resource set) or a subset of the pre-empted resources (fifth resource subset):**
When terminal 1 determines whether second selected resources are pre-empted by other terminals, if there is a second selected resource in the resources indicated by terminal 2, terminal 1 performs reselection for the resource among the second selected resources that appears in the resources indicated by terminal 2. Terminal 1 determines the resource selection window and the sensing window according to the current time moment, performs step 1 above to determine the candidate resource set, and performs reselection for the resource among the second selected resources for which reselection is needed from resources which belong to the candidate resource set but do not belong to the resources indicated by the terminal 2. Depending on the terminal implementation, terminal 1 may, from resources which belong to the candidate resource set but do not belong to the resources indicated by terminal 2, reselect any resource which is selected by is not indicated by transmitting first sidelink control information. Or, terminal 1 may perform reselection for a resource among the selected resources for which reselection is needed. Depending on the terminal 1 implementation, terminal 1 reselects, from the candidate resource set, any resource which is selected but is not indicated by transmitting first sidelink control information.

**In a case where terminal 2 indicates unpreempted resources (sixth resource set) or a subset of the unpreempted resources (sixth resource subset):**
When terminal 1 determines whether second selected resources are pre-empted by other terminals, if there is a second selected resource not in the resources indicated by terminal 2, terminal 1 performs reselection for the resource among the second selected resources that is not in the resources indicated by terminal 2. Terminal 1 determines the resource selection window and the sensing window according to the current time moment, performs step 1 above to determine the candidate resource set, and performs reselection for the resource among the second selected resources for which reselection is needed from resources which belong to the candidate resource set and belong to the resources indicated by the terminal 2. Depending on the terminal implementation, terminal 1 may, from resources which belong to the candidate resource set and belong to the resources indicated by terminal 2, reselect any resource which is selected by is not indicated by transmitting first sidelink control information. Or, terminal 1 may perform reselection for a resource among the selected resources for which reselection is needed. Depending on the terminal 1 implementation, terminal 1 reselects, from the candidate resource set, any resource which is selected but is not indicated by transmitting first sidelink control information.

The dotted arrows in FIG. 15 indicate that the first sidelink control information indication is about to be transmitted, and the solid arrows indicate that the first sidelink control information indication has been transmitted.

In summary, in the methods provided in the embodiments, through the collaboration between the first terminal and the second terminal, the second terminal helps the first terminal with the resource exclusion procedure to obtain the resource set. The first terminal uses the resource set transmitted by the second terminal as assistance information to provide assistance in the reselection procedure in stage for determining whether a selected resource is pre-empted, thereby effectively eliminating the impact of the hidden station problem on the stage for determining whether a selected resource is pre-empted by the first terminal.

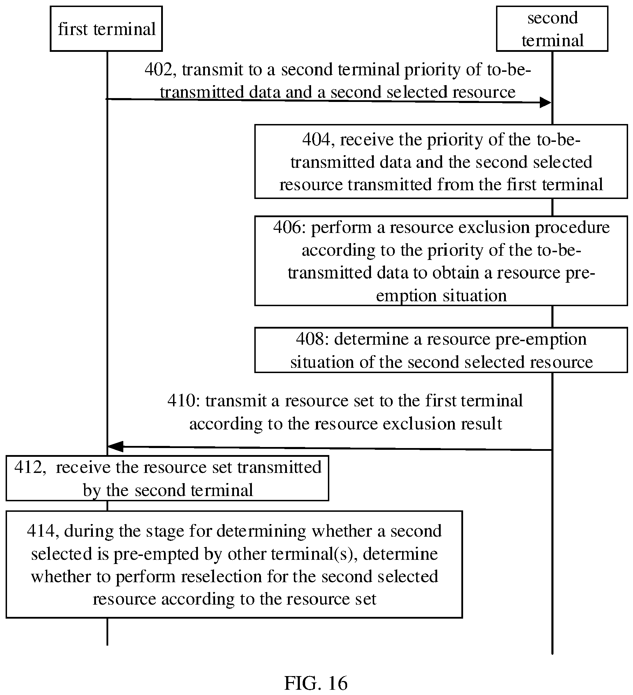

FIG. 16 illustrates a flowchart of a resource reselection method according to another example embodiment of the present disclosure. This embodiment is exemplified by the application of the method to at least two terminals as shown in FIG. 9. The method includes.

**In step 402,** a first terminal transmits to a second terminal priority of to-be-transmitted data and a second selected resource.

The second terminal is a terminal located around the first terminal. The first terminal and the second terminal are located in different geographical locations.

The first terminal uses the resource exclusion procedure and the resource selection procedure described above to select a second selected resource. The second selected resource is a resource that has been selected by the first terminal and is indicated to other terminal(s) by first sidelink control information. As an example, the resource exclusion procedure is shown in step 1 above and the resource selection procedure is shown in step 2 above.

The priority of the to-be-transmitted data may be transmitted concurrently with the second selected resource, or the priority of the to-be-transmitted data and the first selected resource may be transmitted separately. The priority of the to-be-transmitted data and the fsecond selected resource may be transmitted with both of them being carried in the same information, or the priority of the to-be-transmitted data and the second selected resource may be transmitted with both of them being carried in different information.

As an example, the priority of the to-be-transmitted data is carried using at least one of the following information: PCS-RRC signaling; MAC CE; first sidelink control information; and second sidelink control information. That is, the first terminal transmits PCS-RRC signaling to the second terminal, and the PC5-RRC signaling carries the priority of the to-be-transmitted data. Or, the first terminal transmits MAC CE to the second terminal, and the MAC CE carries the priority of the to-be-transmitted data. Or, the first terminal transmits first sidelink control information to the second terminal, and the first sidelink control information carries the priority of the to-be-transmitted data. Or, the first terminal transmits the second sidelink control information to the second terminal, and the second sidelink control information carries the priority of the to-be-transmitted data.

As an example, the second selected resource is carried using at least one of the following information: PCS-RRC signaling; MAC CE; first sidelink control information; and second sidelink control information. That is, the first terminal transmits PCS-RRC signaling to the second terminal, and the PC5-RRC signaling carries the second selected resource. Or, the first terminal transmits MAC CE to the second terminal, and the MAC CE carries the second selected resource. Or, the first terminal transmits first sidelink control information to the second terminal, and the first sidelink control information carries the second selected resource. Or, the first terminal transmits the second sidelink control information to the second terminal, and the second sidelink control information carries the second selected resource.

The first sidelink control information is sidelink control information carried in the PSCCH, and the second sidelink control information is sidelink control information carried in the PSSCH.

**In step 404,** the second terminal receives the priority of the to-be-transmitted data and the second selected resource transmitted from the first terminal.

The second terminal may concurrently receive the priority of the to-be-transmitted and the second selected resource from the first terminal, or may receive the both separately. The priority of the to-be-transmitted and the second selected resource may be received in the same piece of information, or may be received separately in different information.

As an example, the second terminal receives the PC5-RRC signaling transmitted from the first terminal, and the PC5-RRC signaling carries the priority of the to-be-transmitted data. Or, the second terminal receives the MAC CE transmitted from the first terminal, and the MAC CE carries the priority of the to-be-transmitted data. Or, the second terminal receives the first sidelink control information transmitted from the first terminal, and the first sidelink control information carries the priority of the to-be-transmitted data. Or, the second terminal receives the second sidelink control information transmitted from the first terminal, and the second sidelink control information carries the priority of the to-be-transmitted data.

As an example, the second terminal receives the PC5-RRC signaling transmitted from the first terminal, and the PC5-RRC signaling carries the second selected resource. Or, the second terminal receives the MAC CE transmitted from the first terminal, and the MAC CE carries the second selected resource. Or, the second terminal receives the first sidelink control information transmitted from the first terminal, and the first sidelink control information carries the second selected resource. Or, the second terminal receives the second sidelink control information transmitted from the first terminal, and the second sidelink control information carries the second selected resource. The second selected resource may be represented by a time-frequency position, or may be represented by a resource index.

**In step 406,** the second terminal performs a resource exclusion procedure according to the priority of the to-be-transmitted data to obtain a resource pre-emption result.

The second terminal performs the resource exclusion procedure according to the priority of the to-be-transmitted data to obtain a resource pre-emption situation.

The second terminal determines a resource selection window and a resource sensing window, performs a resource exclusion procedure according to the priority of the to-be-transmitted data, and obtains a resource exclusion result. As an example, the resource exclusion procedure may use the procedure shown in step 1 above. As an example, the resource exclusion result includes: a candidate resource set determined by step 1 above (i.e., the set of resources not excluded), and/or, a set of resources excluded by step 1 above.

The resource pre-emption situation is obtained by determining whether there is a time and frequency resource indicated by first sidelink control information carrying a high priority in the resource exclusion result. The resource pre-emption situation is used to indicate a pre-empted resource and/or an unpreempted resource. The pre-empted resource is a time and frequency resource indicated by first sidelink control information carrying a high priority transmitted from other terminal(s). The high priority is higher than the priority of the to-be-transmitted data, or the high priority is higher than the priority of the to-be-transmitted data and higher than a priority threshold. The priority threshold is a threshold configured by a network or is a pre-configured threshold.

According to some embodiments, a parameter related to the resource exclusion procedure is determined by the second terminal itself, and the parameter includes a first parameter related to the resource selection window, and/or, a second parameter related to the resource sensing window. According to some embodiments, the parameter related to the resource exclusion procedure is transmitted by the first terminal to the second terminal, and the parameters is carried in at least one of the following information: PCS-RRC signaling; MAC CE; first sidelink control information; and second sidelink control information.

**In step 408,** the second terminal determines a resource pre-emption situation of the second selected resource.

After obtaining the resource pre-emption situation, the second terminal determines whether the second selected resource is pre-empted according to the set of pre-empted resources and/or set of resources not pre-empted, i.e., the resource pre-emption situation of the second selected resource.

**In step 410,** the second terminal transmits a resource set to the first terminal according to the resource pre-emption situation of the second selected resource.

The second terminal determines, according to the resource pre-emption situation of the second selected resource, at least one of the following resource sets:

- a seventh resource set, wherein the seventh resource set includes a second selected resource which is determined as being pre-empted in the resource exclusion procedure;
- a seventh resource subset, wherein the seventh resource subset is a subset of the seventh resource set;
- a an eighth resource set, wherein the eighth resource set includes a second selected resource which is determined as not being pre-empted in the resource exclusion procedure;
- an eighth resource subset, wherein the eighth resource subset is a subset of the eighth resource set;
- the seventh resource set and the eighth resource set.

The second terminal transmits the seventh resource set to the first terminal; or, the second terminal transmits the seventh resource subset to the first terminal; or, the second terminal transmits the eighth resource set to the first terminal; or, the second terminal transmits the eighth resource subset to the first terminal; or, the second terminal transmits the seventh resource set and the eighth resource set to the first terminal.

Embodiments of the present disclosure do not limit the way of indicating the above-mentioned resource set(s), and the resource(s) in the above-mentioned resource set(s) may be indicated by using time-frequency position(s), or, by using resource index(indexes), or, by using a bitmap. For example, if the second selected resources include a resource 1 and a resource 2, and the time-frequency position of resource 1 is before the time-frequency position of resource 2, the terminal 2 uses two bits "10" to represent the seventh resource set and the eighth resource set. The bit "1" in "10" represents that resource 1 is pre-empted in the resource exclusion procedure, and the bit "0" in "10" represents that resource 2 is not pre-empted.

**In step 412,** the first terminal receives the resource set transmitted by the second terminal. The resource set is used to indicate the resource pre-emption situation determined by the second terminal according to the priority of the to-be-transmitted data.

As an example, the resource set is used to indicate the resource pre-emption situation of the second selected resource.

The resource set is carried using at least one of the following information: PCS-RRC signaling; MAC CE; first sidelink control information; and second sidelink control information.

**In step 414,** when the first terminal determines whether a second selected is pre-empted by other terminal(s), the first terminal determines whether to perform reselection for the second selected resource according to the resource set.

When the second selected resource belongs to the seventh resource set or the seventh resource subset, the first terminal performs reselection for the second selected resource in a candidate resource set.

when the second selected resource does not belong to the eighth resource set or the eighth resource subset, the first terminal performs reselection for the second selected resource in the candidate resource set.

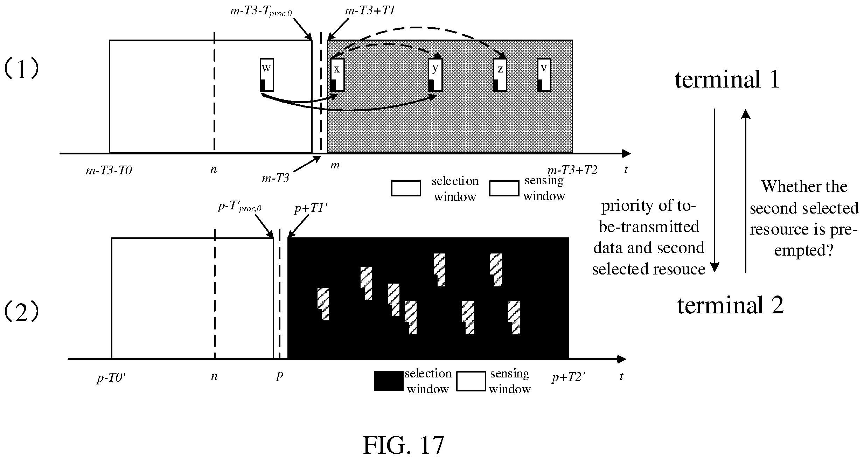

As shown in subfigure 1 of FIG. 17, resources w, x, y, z, and v are time and frequency resources that have been selected by terminal 1 in slot n, and resource x is located in slot m. For resources x and y which are to be indicated by terminal 1 by transmitting first sidelink control information on the resource x and have been indicated by first sidelink control information previously transmitted by terminal 1, terminal 1 performs determination about whether resources x and y are pre-empted by other terminal(s) at least in slot m-T3, and resources x and y are noted as second selected resources. Before terminal 1 determines whether the second selected resources are pre-empted, terminal 1 indicates to terminal 2 the priority of the to-be-transmitted data and the second selected resources. Terminal 2 determines the resource selection window (from p+ Tl' to p+T2') and the resource sensing window (from p-T0' to p-T'$_{proc,0}$) in slot p, and performs the resource exclusion procedure in above step 1 according to the priority of the to-be-transmitted data of terminal 1 to obtain the candidate resource set. For each resource among the second selected resources, if the resource is not in the candidate resource set, terminal 2 further determines whether the resource not being in the candidate resource set is because indication of first sidelink control information which carries a high priority; if yes, terminal 2 determines that the resource is pre-empted.

The high priority is a priority higher than the priority of the to-be-transmitted data. If the network device configures or pre-configures a priority threshold f, the high priority needs to be higher than a priority corresponding to f. Terminal 2 only indicates to terminal 1 a resource which is pre-empted among the second selected resources or a resource which is not pre-empted among the second selected resources, or terminal 2 provides indication of whether each resource in the second selected resources is pre-empted.

The time moment of information interaction between terminal 1 and terminal 2 and the determination of the subset depends on the internal implementation of terminal 1 and/or terminal 2. T1', T2', T0', T'$_{proc,0}$ may either depend on the internal implementation of terminal 2, or may be indicated by terminal 1 to terminal 2, and the parameters need to ensure that the resource selection window determined by terminal 2 contains all of second selected resources. As an example, the above slot p = time moment t+i, t is the time moment when terminal 1 transmits to terminal 2 the priority of the to-be-transmitted data, and i depending on the internal implementation of terminal 2.

The above-mentioned means of information interaction between terminal 1 and terminal 2 may be via PC5-RRC signaling, may be carried via MAC CE, or may be indicated by first sidelink control information or second sidelink control information.

When terminal 1 determines whether the second selected resources are pre-empted by other terminals, according to the indication information from terminal 2 with respect to the second selected resources of terminal 1, terminal 1 performs reselection for a resource among the second selected resources which is determined by terminal 2 as being pre-empted. Terminal 1 determines the resource selection window and the resource sensing window according to the current time moment, performs step 1 above to determine the candidate resource set, and performs reselection for the resource among the second selected resources for which reselection is needed from the candidate resource set. Depending on the implementation of terminal 1, terminal 1 may reselect, from the candidate resource set, any resource which is selected but is not indicated by transmitting first sidelink control information.

The dotted arrows in FIG. 17 indicate that the first sidelink control information indication is about to be transmitted, and the solid arrows indicate that the first sidelink control information indication has been transmitted.

In summary, in the methods provided in the embodiments, through the collaboration between the first terminal and the second terminal, the second terminal helps the first terminal with the resource exclusion procedure to obtain the resource set. The first terminal uses the resource set transmitted by the second terminal as assistance information to provide assistance in the reselection procedure in the re-evaluation stage or in the stage for determining whether a selected resource is pre-empted, thereby effectively eliminating the impact of the hidden station problem on the re-evaluation stage of the first terminal or the stage for determining whether a selected source is pre-empted.

In the methods provided in the embodiments, the first terminal also transmits (the time-frequency position or resource index) of at least one second selected resource to the second terminal, so that the second terminal can provide accurate feedback regarding the resource pre-emption situation of the second selected resource. Thus, the effective collaboration between the first terminal and the second terminal may be realized with less datalinformation volume.

In the example embodiments based on FIG. 14 and FIG. 16, when the second terminal determines that the at least one second selected resource is not pre-empted, the second terminal may not transmit the resource set to the first terminal. It should be noted that the above method embodiments may be implemented independently or may be implemented in combination, which is not limited in the present disclosure.

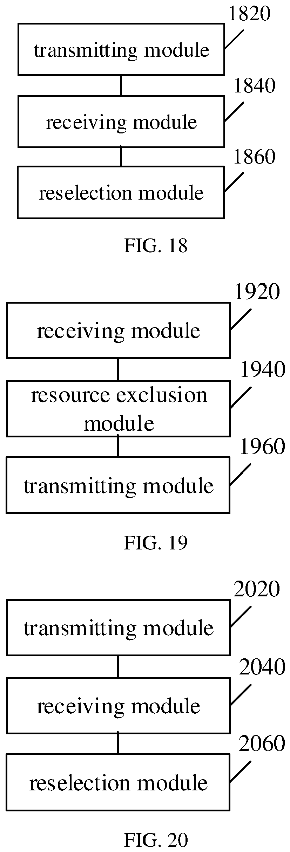

FIG. 18 is a block diagram of a structure of a resource reselection device according to an example embodiment of the present disclosure. The device is applied in a first terminal, or the device is implemented as the first terminal or a part of the first terminal. The device includes: a transmitting module 1820, a receiving module 1840, and a reselection module 1860.

The transmitting module 1820 is configured to transmit to a second terminal a priority of to-be-transmitted data.

The receiving module 1840 is configured to receive a resource set transmitted by the second terminal, wherein the resource set is used to indicate a resource exclusion result obtained by a resource exclusion procedure determined by the second terminal according to the priority of the to-be-transmitted data.

The reselection module 1860 is configured to, when performing re-evaluation on a first selected resource, determine whether to perform reselection for the first selected resource according to the resource set;

wherein the first selected resource is a resource that has been selected by the device and is not indicated to other terminals via first sidelink control information.

In an optional design of the present disclosure, the resource set includes:

a first resource set, wherein the first resource set includes a resource excluded during the resource exclusion procedure;
or, a first resource subset, wherein the first resource subset is a subset of the first resource set;
or, a second resource set, wherein the second resource set is a resource not excluded in the resource exclusion procedure;
or, a second resource subset, wherein the second resource subset is a subset of the second resource set.

In an optional design of the present disclosure, the reselection module is configured to:

when the first selected resource belongs to the first resource set, perform reselection for the first selected resource in a first reselection resource set, wherein a resource in the first reselection resource set belongs to a candidate resource set but does not belong to the first resource set, and the candidate resource set is determined by continuous sensing of the first terminal;

or, when the first selected resource belongs to the first resource subset, perform reselection for the first selected resource in a second reselection resource set, wherein a resource in the second reselection resource set belongs to the candidate resource set but does not belong to the first resource subset, and the candidate resource set is determined by continuous sensing of the first terminal.

In an optional design of the present disclosure, the reselection module is configured to:

when the first selected resource does not belong to the second resource set, perform reselection for the first selected resource in a third reselection resource set, wherein a resource in the third reselection resource set belongs to a candidate resource set and belongs to the second resource set, and the candidate resource set is determined by continuous sensing of the first terminal;

or, when the first selected resource does not belong to the second resource subset, perform reselection for the first selected resource in a fourth reselection resource set, wherein a resource in the fourth reselection resource set belongs to the candidate resource set and belongs to the second resource subset, and the candidate resource set is determined by continuous sensing of the first terminal.

In an optional design of the present disclosure, the transmitting module 1820 is configured to transmit to the second terminal the first selected resource;

wherein the resource set includes:

a third resource set, wherein the third resource set includes a first selected resource excluded in the resource exclusion procedure;

or, a third resource subset, wherein the third resource subset is a subset of the third resource set;

or, a fourth resource set, wherein the fourth resource set includes a first selected resource not excluded in the resource exclusion procedure;

or, a fourth resource subset, wherein the fourth resource subset is a subset of the fourth resource set;

or, the third resource set and the fourth resource set.

In an optional design of the present disclosure, the reselection module is configured to:

when the first selected resource belongs to the third resource set, perform reselection for the first selected resource in a candidate resource set;

or, when the first selected resource belongs to the third resource subset, perform reselection for the first selected resource in the candidate resource set;

or, when the first selected resource does not belong to the fourth resource set, perform reselection for the first selected resource in the candidate resource set;

or, when the first selected resource does not belong to the fourth resource subset, perform reselection for the first selected resource in the candidate resource set.

In the design of the present disclosure, the transmitting module 1820 is configured to:
indicate to the second terminal a parameter required in the resource exclusion procedure, wherein the parameter includes:
a first parameter related to a resource sensing window, and/or a second parameter related to a resource selection window.
In an optional design of the present disclosure, the device and the second terminal communicate with each other using the following information:

PCS-RRC signaling;
MAC CE;
the first sidelink control information; or
second sidelink control information;
wherein the first sidelink control information is sidelink control information carried in a physical sidelink control channel, and the second sidelink control information is sidelink control information carried in a physical sidelink shared channel.

FIG. 19 is a block diagram of a structure of a resource reselection device according to an example embodiment of the present disclosure. The device is applied in a second terminal, or the device is implemented as the second terminal or a part of the second terminal. The device includes a receiving module 1920, a resource exclusion module 1940, and a transmitting module 1960.

The receiving module 1920 is configured to receive a priority of to-be-transmitted data transmitted from a first terminal.

The resource exclusion module 1940 is configured to perform a resource exclusion procedure according to the priority of the to-be-transmitted data to obtain a resource exclusion result.

The transmitting module 1960 is configured to transmit a resource set to the first terminal according to the resource exclusion result, wherein the resource set is used to indicate the resource exclusion result.

In an optional design of the present disclosure, the resource set includes:

a first resource set, wherein the first resource set includes a resource excluded during the resource exclusion procedure;
or, a first resource subset, wherein the first resource subset is a subset of the first resource set;
or, a second resource set, wherein the second resource set is a resource not excluded in the resource exclusion procedure;
or, a second resource subset, wherein the second resource subset is a subset of the second resource set.

In an optional design of the present disclosure, the receiving module 1920 is configured to:

receive a first selected resource from the first terminal, wherein the first selected resource is a resource that has been selected by the device and is not indicated to other terminals via first sidelink control information; and
wherein the resource exclusion module is configured to determine an exclusion situation of the first selected resource in the resource exclusion result;
wherein the transmitting module 1960 is configured to transmit the resource set to the first terminal according to the exclusion situation of the first selected resource.

In an optional design of the present disclosure, the resource set includes:

a third resource set, wherein the third resource set includes a first selected resource excluded in the resource exclusion procedure;
or, a third resource subset, wherein the third resource subset is a subset of the third resource set;
or, a fourth resource set, wherein the fourth resource set includes a first selected resource not excluded in the resource exclusion procedure;
or, a fourth resource subset, wherein the fourth resource subset is a subset of the fourth resource set;
or, the third resource set and the fourth resource set.

In an optional design of the present disclosure, the receiving module 1920 is configured to:

receive a first selected resource from the first terminal, wherein the first selected resource is a resource that has been selected by the device and is not indicated to other terminals via first sidelink control information; and
wherein the resource exclusion module 1940 is configured to determine an exclusion situation of the first selected resource in the resource exclusion result;
wherein the transmitting module 1960 is configured to, in a situation where the first selected resource is not excluded, not transmit the resource set to the first terminal.

In the design of the present disclosure, the receiving module 1920 is configured to:
receive a parameter required in the resource exclusion procedure which is indicated by the first terminal, wherein the parameter includes: a second parameter related to a resource selection window, and optionally a first parameter related to a resource sensing window,

In an optional design of the present disclosure, the device and the first terminal communicate with each other using the following information:

PCS-RRC signaling;
MAC CE;
the first sidelink control information; or
second sidelink control information;
wherein the first sidelink control information is sidelink control information carried in a physical sidelink control channel, and the second sidelink control information is sidelink control information carried in a physical sidelink shared channel.

FIG. 20 is a block diagram of a structure of a resource reselection device according to an example embodiment of the present disclosure. The device is applied in a first terminal, or the device is implemented as the first terminal or a part of the first terminal. The device further includes a transmitting module 2020, a receiving module 2040, and a reselection module 2060.

The transmitting module 2020 is configured to transmit to a second terminal a priority of to-be-transmitted data.

The receiving module 2040 is configured to receive a resource set transmitted by the second terminal, wherein the resource set is used to indicate a resource pre-emption situation obtained in a resource exclusion procedure determined by the second terminal according to the priority of the to-be-transmitted data.

The reselection module configured to, during determination of whether a second selected resource is pre-empted by another terminal, determine whether to perform reselection for the second selected resource according to the resource set; wherein the second selected resource is a resource that has been selected by the first terminal and is indicated to other terminals via first sidelink control information.

In an optional design of the present disclosure, the resource set includes:

a fifth resource set, wherein the fifth resource set is used to indicate a pre-empted resource determined in the resource exclusion procedure;
or, a fifth resource subset, wherein the fifth resource subset is a subset of the fifth resource set;
or, a sixth resource set, wherein the sixth resource set is used to indicate a resource which is not pre-empted and is determined in the resource exclusion procedure;
or, a sixth resource subset, wherein the sixth resource subset is a subset of the sixth resource set.

In an optional design of the present disclosure, the reselection module 2060 is configured to:

when the second selected resource belongs to the fifth resource set, perform reselection for the second selected resource in a fifth reselection resource set or perform reselection for the second selected resource in a candidate resource set, wherein a resource in the fifth reselection resource set belongs to the candidate resource set but does not belong to the fifth resource set, and the candidate resource set is determined by continuous sensing of the first terminal;
or, when the second selected resource belongs to the fifth resource subset, perform reselection for the second selected resource in a sixth reselection resource set or perform reselection for the second selected resource in the candidate resource set, wherein a resource in the sixth reselection resource set belongs to the candidate resource set but does not belong to the fifth resource subset, and the candidate resource set is determined by continuous sensing of the first terminal.

In an optional design of the present disclosure, the reselection module 2060 is configured to:

when the second selected resource does not belong to the sixth resource set, perform reselection for the second selected resource in a seventh reselection resource set or perform reselection for the second selected resource in a candidate resource set, wherein a resource in the seventh reselection resource set belongs to the candidate resource set and belongs to the sixth resource set, and the candidate resource set is determined by continuous sensing of the first terminal;
or, when the second selected resource does not belong to the sixth resource subset, perform reselection for the second selected resource in an eighth reselection resource set or perform reselection for the second selected resource in the candidate resource set, wherein a resource in the eighth reselection resource set belongs to the candidate resource set and belongs to the sixth resource subset, and the candidate resource set is determined by continuous sensing of the first terminal.

In an optional design of the present disclosure, the transmitting module 2020 is further configured to transmit to the second terminal the second selected resource;
wherein the resource set includes:

a seventh resource set, wherein the seventh resource set includes a second selected resource which is determined as being pre-empted in the resource exclusion procedure;
or, a seventh resource subset, wherein the seventh resource subset is a subset of the seventh resource set;
or, an eighth resource set, wherein the eighth resource set includes a second selected resource which is determined as not being pre-empted in the resource exclusion procedure;
or, an eighth resource subset, wherein the eighth resource subset is a subset of the eighth resource set;
or, the seventh resource set and the eighth resource set.

In an optional design of the present disclosure, the reselection module 2060 is configured to:

when the second selected resource belongs to the seventh resource set, perform reselection, by the first terminal, for the second selected resource in a candidate resource set, wherein the candidate resource set is determined by continuous sensing of the first terminal;
or, when the second selected resource does not belong to the eighth resource set, perform reselection, by the first terminal, for the second selected resource in the candidate resource set.

In an optional design of the present disclosure, the transmitting module 2020 is configured to:
transmit to the second terminal a parameter required in the resource exclusion procedure, wherein the parameter includes: a first parameter related to a resource sensing window, and/or a second parameter related to a resource selection window.

In an optional design of the present disclosure, the device and the second terminal communicate with each other using the following information:

PC5-RRC signaling;
MAC CE;
the first sidelink control information; or
second sidelink control information;
wherein the first sidelink control information is sidelink control information carried in a physical sidelink control channel, and the second sidelink control information is sidelink control information carried in a physical sidelink shared channel.

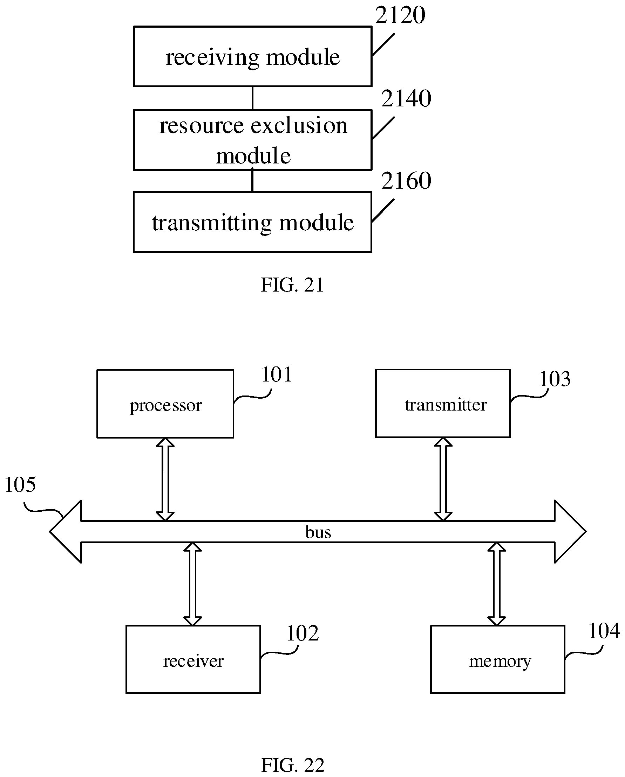

FIG. 21 is a block diagram of a structure of a resource reselection device according to an example embodiment of the present disclosure. The device is applied in a second terminal, or the device is implemented as the second terminal or a part of the second terminal. The device further includes a receiving module 2120, a resource exclusion module 2140 and a transmitting module 2160.

The receiving module 2120 is configured to receive a priority of to-be-transmitted data from a first terminal.

The resource exclusion module 2140 is configured to perform a resource exclusion procedure according to the priority of the to-be-transmitted data to obtain a resource pre-emption situation.

The transmitting module 2160 is configured to transmit a resource set to the first terminal according to the resource pre-emption situation, wherein the resource set is used to indicate the resource pre-emption situation.

In an optional design of the present disclosure, the resource set includes:

a fifth resource set, wherein the fifth resource set is used to indicate a pre-empted resource determined in the resource exclusion procedure;
or, a fifth resource subset, wherein the fifth resource subset is a subset of the fifth resource set;
or, a sixth resource set, wherein the sixth resource set is used to indicate a resource which is not pre-empted and is determined in the resource exclusion procedure;
or, a sixth resource subset, wherein the sixth resource subset is a subset of the sixth resource set.

In an optional design of the present disclosure, the receiving module 2120 is configured to:

receive a second selected resource from the first terminal, wherein the second selected resource is a resource that has been selected by the first terminal and is indicated to another terminal via first sidelink control information; and wherein the resource exclusion module 2140 is configured to determine a resource pre-emption situation of the second selected resource;
wherein the transmitting module 2160 is configured to transmit the resource set to the first terminal according to the resource pre-emption situation of the second selected resource.

In an optional design of the present disclosure, the resource set includes:

a seventh resource set, wherein the seventh resource set includes a second selected resource which is determined as being pre-empted in the resource exclusion procedure;
or, a seventh resource subset, wherein the seventh resource subset is a subset of the seventh resource set;
or, an eighth resource set, wherein the eighth resource set includes a second selected resource which is determined as not being pre-empted in the resource exclusion procedure;
or, an eighth resource subset, wherein the eighth resource subset is a subset of the eighth resource set;

or, the seventh resource set and the eighth resource set.

In an optional design of the present disclosure, the receiving module 2120 is configured to:

receive a second selected resource from the first terminal, wherein the second selected resource is a resource that has been selected by the first terminal and is indicated to another terminal via first sidelink control information; and wherein the resource exclusion module is configured to determine a resource pre-emption situation of the second selected resource in the resource exclusion result;

wherein the transmitting module is configured to, in a situation where the second selected resource is not pre-empted, not transmit the resource set to the first terminal.

In an optional design of the present disclosure, the receiving module 2120 is configured to:
receive a parameter required in the resource exclusion procedure which is indicated by the first terminal, wherein the parameter includes: a first parameter related to a resource sensing window, and/or a second parameter related to a resource selection window.

In an optional design of the present disclosure, the device and the first terminal communicate with each other using the following information:

PC5-RRC signaling;
MAC CE;
the first sidelink control information; or
second sidelink control information;
wherein the first sidelink control information is sidelink control information carried in a physical sidelink control channel, and the second sidelink control information is sidelink control information carried in a physical sidelink shared channel.

FIG. 22 illustrates a schematic diagram of the structure of a communication device (first terminal or second terminal) according to an example embodiment of the present disclosure. The communication device includes: a processor 101, a receiver 102, a transmitter 103, a memory 104, and a bus 105.

The processor 101 includes one or more processing cores, and the processor 101 performs various functional applications as well as information processing by running software programs as well as modules.

The receiver 102 and the transmitter 103 may be implemented as a communication component, which may be a communication chip.

The memory 104 is connected to the processor 101 via the bus 105.

The memory 104 may be used to store at least one instruction, and the processor 101 is used to execute the at least one instruction to implement the various steps in the method embodiments described above.

In addition, memory 104 may be implemented by any type of volatile or non-volatile storage device or a combination thereof. The volatile or non-volatile storage device includes, but not limited to: magnetic disk or optical disk, Electrically-Erasable Programmable Read Only Memory (EEPROM), Erasable Programmable Read Only Memory (EPROM), Static Random Access Memory (SRAM), Read-Only Memory (ROM), magnetic memory, flash memory, Programmable Read-Only Memory (PROM).

In example embodiments, there is also provided a computer-readable storage medium. The computer-readable storage medium has stored therein at least one instruction, at least one program, code set or instruction set, and the at least one instruction, and said at least one program, the code set or instruction set is loaded and executed by the processor to implement the resource reselection methods according to each of the above method embodiments which are performed by a first terminal or a second terminal.

In example embodiments, there is also provided a computer program product or computer program including computer instructions. The computer instructions are stored in a computer readable storage medium, a processor of the communication device reads the computer instructions from the computer readable storage medium, and the processor executes the computer instructions such that the communication device performs the resource reselection methods described in the above aspects.

A person of ordinary skill in the art can understand that all or some of the steps for implementing the above embodiments can be accomplished by hardware, or by a program to instruct relevant hardware to perform the steps, and the program may be stored in a computer readable storage medium, and the above storage medium may be read-only memory, magnetic disk or CD-ROM, etc.

**Claims**

1. A resource reselection method, applied in a first terminal, the method comprising:

   transmitting (102) to a second terminal a priority of to-be-transmitted data;
   receiving (110) a resource set transmitted by the second terminal, wherein the resource set is used to indicate a resource exclusion result obtained by a resource exclusion procedure determined by the second terminal according to the priority of the to-be-transmitted data; and
   when performing re-evaluation on a first selected resource, determining (112) whether to perform reselection for the first selected resource according to the resource set;
   **characterised in that**
   the first selected resource is a resource that has been selected by the first terminal and is not indicated to another terminal via first sidelink control information;
   wherein the method is further **characterised by**:

   indicating to the second terminal a parameter required in the resource exclusion procedure, wherein the parameter comprises: a second parameter related to a resource selection window; or
   wherein the parameter required in the resource exclusion procedure is determined by the second terminal itself, and the parameter comprises a first parameter related to a resource selection window.

2. The method according to claim 1, wherein the resource set comprises:
   a second resource set, wherein the second resource set is a set of at least one resource not excluded in the resource exclusion procedure.

3. The method according to any one of claims 1 to 2, wherein the first terminal and the second terminal communicate with each other using the following information:

   Media Access Control layer Control Element, MAC CE;
   or
   second sidelink control information;
   wherein the second sidelink control information is sidelink control information carried in a physical sidelink shared channel.

4. A resource reselection method, applied in a second terminal, the method comprising:

   receiving (104) a priority of to-be-transmitted data transmitted from a first terminal;
   performing (106) a resource exclusion procedure according to the priority of the to-be-transmitted data to obtain a resource exclusion result; and
   transmitting (108) a resource set to the first terminal according to the resource exclusion result, wherein the resource set is used to indicate the resource exclusion result;
   wherein the method is **characterised by**:

   receiving a parameter required in the resource exclusion procedure which is indicated by the first terminal, wherein the parameter comprises: a second parameter related to a resource selection window; or
   wherein the parameter required in the resource exclusion procedure is determined by the second terminal itself, and the parameter comprises a first parameter related to a resource selection window.

5. The method according to claim 4, wherein the resource set comprises:
   a second resource set, wherein the second resource set is a set of at least one resource not excluded in the resource exclusion procedure.

6. The method according to any one of claims 4 to 5, wherein the first terminal and the second terminal communicate with each other using the following information:

   Media Access Control layer Control Element, MAC CE;
   or
   second sidelink control information;
   wherein the second sidelink control information is sidelink control information carried in a physical sidelink shared channel.

7. A first terminal, comprising:

a transmitting module (1820) configured to transmit to a second terminal a priority of to-be-transmitted data;
a receiving module (1840) configured to receive a resource set transmitted by the second terminal, wherein the resource set is used to indicate a resource exclusion result obtained by a resource exclusion procedure determined by the second terminal according to the priority of the to-be-transmitted data; and
a reselection module (1860) configured to, when performing re-evaluation on a first selected resource, determine whether to perform reselection for the first selected resource according to the resource set;
**characterised in that**
the first selected resource is a resource that has been selected by the device and is not indicated via first sidelink control information;
the transmitting module is configured to:

indicate to the second terminal a parameter required in the resource exclusion procedure, wherein the parameter comprises: a second parameter related to a resource selection window; or
wherein the parameter required in the resource exclusion procedure is determined by the second terminal itself, and the parameter comprises a first parameter related to a resource selection window.

8. The first terminal according to claim 7, wherein the resource set comprises:
a second resource set, wherein the second resource set is a set of at least one resource not excluded in the resource exclusion procedure.

9. The first terminal according to any one of claims 7 to 8, wherein the first terminal and the second terminal communicate with each other using the following information:

Media Access Control layer Control Element, MAC CE;
or
second sidelink control information;
wherein the second sidelink control information is sidelink control information carried in a physical sidelink shared channel.

10. A second terminal, comprising:

a receiving module (1920) configured to receive a priority of to-be-transmitted data transmitted from a first terminal;
a resource exclusion module (1940) configured to perform a resource exclusion procedure according to the priority of the to-be-transmitted data to obtain a resource exclusion result; and
a transmitting module (1960) configured to transmit a resource set to the first terminal according to the resource exclusion result, wherein the resource set is used to indicate the resource exclusion result;
**characterised in that** the receiving module is configured to:

receive a parameter required in the resource exclusion procedure which is indicated by the first terminal, wherein the parameter comprises: a second parameter related to a resource selection window; or
wherein the parameter required in the resource exclusion procedure is determined by the second terminal itself, and the parameter comprises a first parameter related to a resource selection window.

11. The second terminal according to claim 10, wherein the resource set comprises:
a second resource set, wherein the second resource set is a set of at least one resource not excluded in the resource exclusion procedure.

**Patentansprüche**

1. Verfahren zur Ressourcenneuauswahl, das in einem ersten Endgerät angewendet wird, wobei das Verfahren umfasst:

Übertragen (102) einer Priorität von zu übertragenden Daten an ein zweites Endgerät;

Empfangen (110) eines Ressourcensatzes, der durch das zweite Endgerät übertragen wird, wobei der Ressourcensatz verwendet wird, um ein Ressourcenausschlussergebnis anzugeben, das durch einen Ressourcenausschlussvorgang erhalten wird, der durch das zweite Endgerät gemäß der Priorität der zu übertragenden Daten bestimmt wird; und

beim Durchführen einer Neubewertung einer ersten ausgewählten Ressource, Bestimmen (112), ob eine Neuauswahl für die erste ausgewählte Ressource gemäß dem Ressourcensatz durchzuführen ist;

**dadurch gekennzeichnet, dass**

die erste ausgewählte Ressource eine Ressource ist, die durch das erste Endgerät ausgewählt wurde und einem anderen Endgerät nicht durch erste Sidelink-Steuerinformationen angegeben wird;

wobei das Verfahren ferner **gekennzeichnet ist durch**:

Angeben eines Parameters an das zweite Endgerät, der in dem Ressourcenausschlussvorgang erforderlich ist, wobei der Parameter umfasst: einen zweiten Parameter, der sich auf ein Ressourcenauswahlfenster bezieht; oder

wobei der in dem Ressourcenausschlussvorgang erforderliche Parameter **durch** das zweite Endgerät selbst bestimmt wird und der Parameter einen ersten Parameter umfasst, der sich auf ein Ressourcenauswahlfenster bezieht.

2.  Verfahren nach Anspruch 1, wobei der Ressourcensatz umfasst:
einen zweiten Ressourcensatz, wobei der zweite Ressourcensatz ein Satz von zumindest einer Ressource ist, die in dem Ressourcenausschlussvorgang nicht ausgeschlossen wurde.

3.  Verfahren nach einem der Ansprüche 1 bis 2, wobei das erste Endgerät und das zweite Endgerät unter Verwendung der folgenden Informationen miteinander kommunizieren:

Steuerelement der Medienzugangssteuerschicht, MAC CE; oder
zweite Sidelink-Steuerinformationen;
wobei die zweiten Sidelink-Steuerinformationen Sidelink-Steuerinformationen sind, die in einem gemeinsam genutzten physikalischen Sidelink-Kanal getragen werden.

4.  Ressourcenneuauswahlverfahren, das in einem zweiten Endgerät angewendet wird, wobei das Verfahren umfasst:

Empfangen (104) einer Priorität von zu übertragenden Daten, die von einem ersten Endgerät übertragen werden;
Durchführen (106) eines Ressourcenausschlussvorgangs gemäß der Priorität der zu übertragenden Daten, um ein Ressourcenausschlussergebnis zu erhalten; und
Übertragen (108) eines Ressourcensatzes an das erste Endgerät gemäß dem Ressourcenausschlussergebnis des es, wobei der Ressourcensatz verwendet wird, um Ressourcenausschlussergebnis anzugeben;
wobei das Verfahren **gekennzeichnet ist durch**:

Empfangen eines in dem Ressourcenausschlussvorgang erforderlichen Parameters, der **durch** das erste Endgerät angegeben wird, wobei der Parameter umfasst: einen zweiten Parameter, der sich auf ein Ressourcenauswahlfenster bezieht; oder
wobei der in dem Ressourcenausschlussvorgang erforderliche Parameter **durch** das zweite Endgerät selbst bestimmt wird und der Parameter einen ersten Parameter umfasst, der sich auf ein Ressourcenauswahlfenster bezieht.

5.  Verfahren nach Anspruch 4, wobei der Ressourcensatz umfasst:
einen zweiten Ressourcensatz, wobei der zweite Ressourcensatz ein Satz von zumindest einer Ressource ist, die in dem Ressourcenausschlussvorgang nicht ausgeschlossen wurde.

6.  Verfahren nach einem der Ansprüche 4 bis 5, wobei das erste Endgerät und das zweite Endgerät unter Verwendung der folgenden Informationen miteinander kommunizieren:

Steuerelement der Medienzugangssteuerschicht, MAC CE; oder
zweite Sidelink-Steuerinformationen;
wobei die zweiten Sidelink-Steuerinformationen Sidelink-Steuerinformationen sind, die in einem gemeinsam genutzten physikalischen Sidelink-Kanal getragen werden.

7. Erstes Endgerät, das umfasst:

ein Übertragungsmodul (1820), das dazu ausgelegt ist, eine Priorität der zu übertragenden Daten an ein zweites Endgerät zu übertragen;

ein Empfangsmodul (1840), das dazu ausgelegt ist, einen von dem zweiten Endgerät übertragenen Ressourcensatz zu empfangen, wobei der Ressourcensatz dazu verwendet wird, ein Ressourcenausschlussergebnis anzugeben, das durch einen Ressourcenausschlussvorgang erhalten wird, der von dem zweiten Endgerät gemäß der Priorität der zu übertragenden Daten bestimmt wird; und

ein Neuauswahlmodul (1860), das dazu ausgelegt ist, beim Durchführen einer Neubewertung an einer ersten ausgewählten Ressource zu bestimmen, ob eine Neuauswahl für die erste ausgewählte Ressource gemäß dem Ressourcensatz durchgeführt werden soll;

**dadurch gekennzeichnet, dass**

die erste ausgewählte Ressource eine Ressource ist, die durch die Vorrichtung ausgewählt wurde und nicht über erste Sidelink-Steuerinformationen angegeben wird;

das Übertragungsmodul dazu ausgelegt ist:

dem zweiten Endgerät einen für den Ressourcenausschlussvorgang erforderlichen Parameter anzugeben, wobei der Parameter umfasst: einen zweiten Parameter, der sich auf ein Ressourcenauswahlfenster bezieht; oder

wobei der in dem Ressourcenausschlussvorgang erforderliche Parameter durch das zweite Endgerät selbst bestimmt wird und der Parameter einen ersten Parameter umfasst, der sich auf ein Ressourcenauswahlfenster bezieht.

8. Erstes Endgerät nach Anspruch 7, wobei der Ressourcensatz umfasst:
einen zweiten Ressourcensatz, wobei der zweite Ressourcensatz ein Satz von zumindest einer Ressource ist, die in dem Ressourcenausschlussvorgang nicht ausgeschlossen wurde.

9. Erstes Endgerät nach einem der Ansprüche 7 bis 8, wobei das erste Endgerät und das zweite Endgerät unter Verwendung der folgenden Informationen miteinander kommunizieren:

Steuerelement der Medienzugangssteuerschicht, MAC CE; oder

zweite Sidelink-Steuerinformationen;

wobei die zweiten Sidelink-Steuerinformationen Sidelink-Steuerinformationen sind, die in einem gemeinsam genutzten physikalischen Sidelink-Kanal getragen werden.

10. Zweites Endgerät, das umfasst:

ein Empfangsmodul (1920), das dazu ausgelegt ist, eine Priorität von zu übertragenden Daten zu empfangen, die von einem ersten Endgerät übertragen werden;

ein Ressourcenausschlussmodul (1940), das dazu ausgelegt ist, einen Ressourcenausschlussvorgang gemäß der Priorität der zu übertragenden Daten durchzuführen, um ein Ressourcenausschlussergebnis zu erhalten; und

ein Übertragungsmodul(1960), das dazu ausgelegt ist, einen Ressourcensatz an das erste Endgerät gemäß dem Ressourcenausschlussergebnis zu übertragen, wobei der Ressourcensatz verwendet wird, um das Ressourcenausschlussergebnis anzugeben;

**dadurch gekennzeichnet, dass** das Empfangsmodul dazu ausgelegt ist:

einen in dem Ressourcenausschlussvorgang erforderlichen Parameters zu empfangen, der durch das erste Endgerät angegeben wird, wobei der Parameter umfasst: einen zweiten Parameter, der sich auf ein Ressourcenauswahlfenster bezieht; oder

wobei der in dem Ressourcenausschlussvorgang erforderliche Parameter durch das zweite Endgerät selbst bestimmt wird und der Parameter einen ersten Parameter umfasst, der sich auf ein Ressourcenauswahlfenster bezieht.

11. Zweites Endgerät nach Anspruch 10, wobei der Ressourcensatz umfasst:
einen zweiten Ressourcensatz, wobei der zweite Ressourcensatz ein Satz von zumindest einer Ressource ist, die in dem Ressourcenausschlussvorgang nicht ausgeschlossen wurde.

**Revendications**

1. Procédé de resélection de ressources, appliqué dans un premier terminal, le procédé comprenant :

   la transmission (102) à un second terminal d'une priorité de données à transmettre ;
   la réception (110) d'un ensemble de ressources transmis par le second terminal, dans lequel l'ensemble de ressources est utilisé pour indiquer un résultat d'exclusion de ressources obtenu par une procédure d'exclusion de ressources déterminée par le second terminal en fonction de la priorité des données à transmettre ; et
   lors de l'exécution d'une réévaluation sur une première ressource sélectionnée, la détermination (112) du fait de savoir s'il convient d'effectuer une resélection pour la première ressource sélectionnée en fonction de l'ensemble de ressources ;
   **caractérisé en ce que**
   la première ressource sélectionnée est une ressource qui a été sélectionnée par le premier terminal et qui n'est pas indiquée à un autre terminal par l'intermédiaire de premières informations de commande de liaison latérale ;
   dans lequel le procédé est en outre **caractérisé par** :

   l'indication au second terminal d'un paramètre requis dans la procédure d'exclusion de ressources, dans lequel le paramètre comprend : un second paramètre relatif à une fenêtre de sélection de ressources ; ou
   dans lequel le paramètre requis dans la procédure d'exclusion de ressources est déterminé par le second terminal lui-même, et le paramètre comprend un premier paramètre relatif à une fenêtre de sélection de ressources.

2. Procédé selon la revendication 1, dans lequel l'ensemble de ressources comprend :
   un second ensemble de ressources, dans lequel le second ensemble de ressources est un ensemble d'au moins une ressource non exclue dans la procédure d'exclusion de ressources.

3. Procédé selon l'une quelconque des revendications 1 à 2, dans lequel le premier terminal et le second terminal communiquent entre eux à l'aide des informations suivantes :

   un élément de commande de la couche de commande d'accès au support, MAC CE ;
   ou
   de secondes informations de commande de liaison latérale ;
   dans lequel les secondes informations de commande de liaison latérale sont des informations de commande de liaison latérale transportées dans un canal physique partagé de liaison latérale.

4. Procédé de resélection de ressources, appliqué dans un second terminal, le procédé comprenant :

   la réception (104) d'une priorité de données à transmettre transmises à partir d'un premier terminal ;
   l'exécution (106) d'une procédure d'exclusion de ressources en fonction de la priorité des données à transmettre pour obtenir un résultat d'exclusion de ressources ; et
   la transmission (108) d'un ensemble de ressources au premier terminal en fonction du résultat d'exclusion de ressources, dans lequel l'ensemble de ressources est utilisé pour indiquer le résultat d'exclusion de ressources ;
   dans lequel le procédé est **caractérisé par** :

   la réception d'un paramètre requis dans la procédure d'exclusion de ressources qui est indiqué par le premier terminal, dans lequel le paramètre comprend : un second paramètre relatif à une fenêtre de sélection de ressources ; ou
   dans lequel le paramètre requis dans la procédure d'exclusion de ressources est déterminé par le second terminal lui-même, et le paramètre comprend un premier paramètre relatif à une fenêtre de sélection de ressources.

5. Procédé selon la revendication 4, dans lequel l'ensemble de ressources comprend :
   un second ensemble de ressources, dans lequel le second ensemble de ressources est un ensemble d'au moins une ressource non exclue dans la procédure d'exclusion de ressources.

6. Procédé selon l'une quelconque des revendications 4 à 5, dans lequel le premier terminal et le second terminal communiquent entre eux à l'aide des informations suivantes :

un élément de commande de la couche de commande d'accès au support, MAC CE ;
ou
de secondes informations de commande de liaison latérale ;
dans lequel les secondes informations de commande de liaison latérale sont des informations de commande de liaison latérale transportées dans un canal physique partagé de liaison latérale.

7. Premier terminal, comprenant :

un module de transmission (1820) configuré pour transmettre à un second terminal une priorité de données à transmettre ;
un module de réception (1840) configuré pour recevoir un ensemble de ressources transmis par le second terminal, dans lequel l'ensemble de ressources est utilisé pour indiquer un résultat d'exclusion de ressources obtenu par une procédure d'exclusion de ressources déterminée par le second terminal en fonction de la priorité des données à transmettre ; et
un module de resélection (1860) configuré pour, lors de l'exécution d'une réévaluation sur une première ressource sélectionnée, déterminer s'il convient d'effectuer une resélection pour la première ressource sélectionnée en fonction de l'ensemble de ressources ;
**caractérisé en ce que**
la première ressource sélectionnée est une ressource qui a été sélectionnée par le dispositif et qui n'est pas indiquée par l'intermédiaire de premières informations de commande de liaison latérale ;
le module de transmission est configuré pour :

indiquer au second terminal un paramètre requis dans la procédure d'exclusion de ressources, dans lequel le paramètre comprend : un second paramètre relatif à une fenêtre de sélection de ressources ; ou
dans lequel le paramètre requis dans la procédure d'exclusion de ressources est déterminé par le second terminal lui-même, et le paramètre comprend un premier paramètre relatif à une fenêtre de sélection de ressources.

8. Premier terminal selon la revendication 7, dans lequel l'ensemble de ressources comprend :
un second ensemble de ressources, dans lequel le second ensemble de ressources est un ensemble d'au moins une ressource non exclue dans la procédure d'exclusion de ressources.

9. Premier terminal selon l'une quelconque des revendications 7 à 8, dans lequel le premier terminal et le second terminal communiquent entre eux à l'aide des informations suivantes :

un élément de commande de la couche de commande d'accès au support, MAC CE ;
ou
de secondes informations de commande de liaison latérale ;
dans lequel les secondes informations de commande de liaison latérale sont des informations de commande de liaison latérale transportées dans un canal physique partagé de liaison latérale.

10. Second terminal, comprenant :

un module de réception (1920) configuré pour recevoir une priorité de données à transmettre transmises à partir d'un premier terminal ;
un module d'exclusion de ressources (1940) configuré pour effectuer une procédure d'exclusion de ressources en fonction de la priorité des données à transmettre pour obtenir un résultat d'exclusion de ressources ; et
un module de transmission (1960) configuré pour transmettre un ensemble de ressources au premier terminal en fonction du résultat d'exclusion de ressources, dans lequel l'ensemble de ressources est utilisé pour indiquer le résultat d'exclusion de ressources ;
**caractérisé en ce que** le module de réception est configuré pour :

recevoir un paramètre requis dans la procédure d'exclusion de ressources qui est indiqué par le premier terminal, dans lequel le paramètre comprend : un second paramètre relatif à une fenêtre de sélection de ressources ; ou
dans lequel le paramètre requis dans la procédure d'exclusion de ressources est déterminé par le second terminal lui-même, et le paramètre comprend un premier paramètre relatif à une fenêtre de sélection de ressources.

**11.** Second terminal selon la revendication 10, dans lequel l'ensemble de ressources comprend :
un second ensemble de ressources, dans lequel le second ensemble de ressources est un ensemble d'au moins une ressource non exclue dans la procédure d'exclusion de ressources.

FIG. 1

FIG. 2

FIG. 3

FIG. 4

FIG. 5

FIG. 6

FIG. 7

FIG. 8

FIG. 9

Data Network (DN)

V2X application server

5G core network

Unified Data Management (UDM)

Policy Control Function (PCF)

Network Exposure Function (NEF)

Application Function (AF)

Unified Data Repository (UDR)

Access and Mobility Management Function (AMF)

Session Management Functio (SMF)

User Plane Function (UPF)

N6

Radio Access Network (RAN)

User Equipment 4 (UE4)

User Equipment 1 (UE1)

User Equipment 3 (UE3)

User Equipment 2 (UE2)

V2X application

Uu

PC5

V5

```
┌──────────────┐                                    ┌──────────────┐
│              │                                    │   second     │
│ first terminal│                                    │  terminal    │
└──────┬───────┘                                    └──────┬───────┘
       │  102, transmit to the second terminal priority of to-be-
       │              transmitted data
       │────────────────────────────────────────────────▶│
       │        ┌─────────────────────────────────────────────────┐
       │        │ 104, receive the priority of the to-be-transmitted│
       │        │      data transmitted from the first terminal     │
       │        └─────────────────────────────────────────────────┘
       │        ┌─────────────────────────────────────────────────┐
       │        │ 106: perform a resource exclusion procedure       │
       │        │ according to the priority of the to-be-transmitted│
       │        │ data to obtain a resource exclusion result        │
       │        └─────────────────────────────────────────────────┘
       │  108: transmit a resource set to the first terminal according
       │              to the resource exclusion result
       │◀────────────────────────────────────────────────│
┌──────────────────────────────────┐                     │
│ 110, receive the resource set transmitted│              │
│        by the second terminal     │                     │
└──────────────────────────────────┘                     │
┌───────────────────────────────────────────────┐        │
│ 112:  when performing re-evaluation of a first selected resource,│
│ determine whether to perform reselection for the first selected │
│          resource according to the resource set                 │
└───────────────────────────────────────────────┘        │
       │                                                  │
```

FIG. 10

38

FIG. 11

first terminal

second terminal

202, transmit to the second terminal priority of to-be-transmitted data and a first selected resource

204, receive the priority of the to-be-transmitted data and the first selected resource transmitted from the first terminal

206, perform a resource exclusion procedure according to the priority of the to-be-transmitted data to obtain a resource exclusion result

208: determine by the second terminal an exclusion situation of the first selected resource in the resource exclusion result

220: transmit a resource set to the first terminal according to the exclusion result

212, receive the resource set transmitted by the second terminal

214: when performing re-evaluation of a first selected resource, determine whether to perform reselection for the first selected resource according to the resource set

FIG. 12

FIG. 13

terminal 1

priority of to-be-transmitted data and first selected resource

whether the first selected resource is in a candidate resource set of terminal 2

terminal 2

first terminal

second terminal

302, transmit to a second terminal priority of to-be-transmitted data

304, receive the priority of the to-be-transmitted data sent from the first terminal

306: perform a resource exclusion procedure according to the priority of the to-be-transmitted data to obtain a resource pre-emption situation

308: transmit a resource set to the first terminal according to the resource pre-emption situation

310, receive the resource set transmitted by the second terminal

312, during the stage for determining whether a second selected resource is pre-empted by other terminal(s), determine whether to perform reselection for the second selected resource according to the resource set

FIG. 14

FIG. 15

EP 4 192 095 B1

| first terminal | | second terminal |

402, transmit to a second terminal priority of to-be-transmitted data and a second selected resource

404, receive the priority of the to-be-transmitted data and the second selected resource transmitted from the first terminal

406: perform a resource exclusion procedure according to the priority of the to-be-transmitted data to obtain a resource pre-emption situation

408: determine a resource pre-emption situation of the second selected resource

410: transmit a resource set to the first terminal according to the resource exclusion result

412, receive the resource set transmitted by the second terminal

414, during the stage for determining whether a second selected is pre-empted by other terminal(s), determine whether to perform reselection for the second selected resource according to the resource set

FIG. 16

FIG. 17

EP 4 192 095 B1

1820

transmitting module

1840

receiving module

1860

reselection module

FIG. 18

1920

receiving module

1940

resource exclusion module

1960

transmitting module

FIG. 19

2020

transmitting module

2040

receiving module

2060

reselection module

FIG. 20

receiving module 2120

resource exclusion module 2140

transmitting module 2160

FIG. 21

processor 101

transmitter 103

105

bus

receiver 102

memory 104

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4169318 A

**Non-patent literature cited in the description**

- Summary for AI 8.11.2.2 Feasibility and benefits for mode 2 enhancements. *R1-2007412*